# EUROPEAN PATENT APPLICATION

(11) **EP 4 760 608 A1**
(43) Date of publication of application: **17.06.2026**
(21) Application number: 23948504.8
(22) Date of filing: 09.08.2023
(51) Int. Cl.: G06N 10/70

(54) **INFORMATION PROCESSING PROGRAM, INFORMATION PROCESSING METHOD, INFORMATION PROCESSING DEVICE, AND SYSTEM**

(71) Applicant: FUJITSU LIMITED, Kawasaki-shi, Kanagawa 211-8588 (JP)
(72) Inventor: FUJISAKI, Jun, Kawasaki-shi, Kanagawa 211-8588 (JP)
(74) Representative: Haseltine Lake Kempner LLP
(86) International application number: PCT/JP2023/029200
(87) International publication number: WO 2025/032787

(57) **Abstract**

An information processing device (100) identifies multiple divided regions (140) obtained by dividing an entire region of a logical qubit (110). The information processing device (100) determines in each divided region (140) of the identified plurality of divided regions (140) and based on the obtained syndrome of each auxiliary qubit (112), a data qubit (111) that is to be judged as having an error. The information processing device (100) updates the obtained syndrome of each auxiliary qubit (112), based on the data qubit (111) determined to be judged as having an error in the logical qubit (110). The information processing device (100) determines the data qubit (111) that is to be judged as having an error in a partial region shared by the divided regions (140), based on the updated syndrome of each auxiliary qubit (112).

## Description

### TECHNICAL FIELD

The embodiments discussed herein are related to an information processing program, an information processing method, an information processing device, and a system.

### BACKGROUND ART

Conventionally, there is a logical qubit in which multiple data qubits and multiple auxiliary qubits are arranged in a two-dimensional lattice such that the auxiliary qubits are present at intersections of the two-dimensional lattice and the auxiliary qubits and the data qubits are alternately arranged along line segments of the two-dimensional lattice. In a logical qubit, there is a technique of detecting a data qubit in which an error has occurred, based on a syndrome of each of multiple auxiliary qubits. The error is superimposition of noise on information. The syndrome is information of an auxiliary qubit to which information of an adjacent data qubit is transferred through a two-qubit operation. For example, the data qubit in which the error has occurred is detected by searching for the pattern of the data qubit in which the error has occurred among the multiple data qubits that reproduce the pattern of the syndrome of each auxiliary qubit.

In a related art, for example, a neural network decoder performs a fusion decoding process with respect to feature information obtained from error syndrome information and thereby generates error result information. There is also a technique for determining one or more errors in the execution of a quantum algorithm from detection events written to an array representing a patch of a quantum error correction circuit in a series of steps in the quantum algorithm, for example, transformed from a syndrome measurement. In addition, for example, there is a technique of preparing data qubits as multiple multi-qubit entangled states. In addition, for example, there is a technique of forming a neural network that identifies a correction response to an error syndrome.
Patent Document 1: Published Japanese-Translation of PCT Application, Publication No. 2022-532466
Patent Document 2: Japanese Laid-Open Patent Publication No. 2022-069525
Patent Document 3: U.S. Patent Application Publication No. 2020/0119748
Patent Document 4: U.S. Patent Application Publication No. 2019/0044542

### DISCLOSURE OF INVENTION

### PROBLEM TO BE SOLVED BY THE INVENTION

However, with the related arts, it is difficult to detect a data qubit in which an error has occurred. For example, as the number of data qubits increases, the processing time and processing load necessary to detect a data qubit in which an error has occurred increase. Specifically, when a pattern of data qubits in which an error has occurred is searched for as a minimum weight perfect matching problem, the processing time becomes O(N^3). N is the number of qubits.

According to one aspect, an object of the present invention is to facilitate detection of a data qubit in which an error has occurred.

### MEANS FOR SOLVING PROBLEM

According to one embodiment, an information processing program, an information processing method, and an information processing device are proposed that: identify a plurality of divided regions, each including one rectangular region divided by a region on a line segment in at least one of a vertical direction and a horizontal direction, the each sharing a region that is adjacent to the rectangular region and on the line segment in the one of the vertical direction and the horizontal direction, the plurality of divided regions being identified in an entire region of a logical qubit in which a plurality of data qubits and a plurality of auxiliary qubits are arranged in a two-dimensional lattice shape such that the plurality of auxiliary qubits is present at intersections of the two-dimensional lattice shape and the plurality of auxiliary qubits and the plurality of data qubits are arranged alternating each other on each line segment of the two-dimensional lattice shape; determine in each of the plurality of divided regions and based on a syndrome of each of the plurality of auxiliary qubits, a data qubit that of the plurality of data qubits is to be judged as having an error; update in each of the plurality of divided regions, a syndrome of an auxiliary qubit that of the plurality of auxiliary qubits is adjacent to a first data qubit that overlaps or is adjacent to the region shared by the plurality of divided regions, when at the determining, the first data qubit is determined to be the data qubit judged to have an error; and determine in the region shared by the plurality of divided regions and based on the syndrome updated in each of the plurality of divided regions at the updating, a data qubit that of the plurality of data qubits is to be judged as having an error.

### EFFECT OF THE INVENTION

According to one aspect, it is possible to facilitate detection of a data qubit in which an error has occurred.

### BRIEF DESCRIPTION OF DRAWINGS

Fig. 1 is an explanatory diagram depicting an example of an information processing method according to an embodiment.
Fig. 2 is an explanatory diagram depicting an example of a quantum computation control system 200.
Fig. 3 is a block diagram of an example of a hardware configuration of an information processing device 100.
Fig. 4 is a block diagram depicting an example of a hardware configuration of a quantum computing device 210.
Fig. 5 is a block diagram depicting a functional configuration example of the information processing device 100.
Fig. 6 is an explanatory diagram depicting an example of a logical qubit 600.
Fig. 7 is an explanatory diagram depicting an example of determining a data qubit 611 to be judged as having a Z error.
Fig. 8 is an explanatory diagram depicting an example of determining the data qubit 611 to be judged as having a Z error.
Fig. 9 is an explanatory diagram depicting an example of determining the data qubit 611 to be judged as having a Z error.
Fig. 10 is an explanatory diagram depicting an example of determining the data qubit 611 to be judged as having a Z error.
Fig. 11 is an explanatory diagram depicting an example of determining the data qubit 611 to be judged as having a Z error.
Fig. 12 is an explanatory diagram depicting another example of determining a data qubit 611 to be judged as having a Z error.
Fig. 13 is an explanatory diagram depicting a specific example of the operation of an information processing system.
Fig. 14 is an explanatory diagram depicting a specific example of the operation of the information processing system.
Fig. 15 is an explanatory diagram depicting a specific example of the operation of the information processing system.
Fig. 16 is an explanatory diagram depicting a specific example of the operation of the information processing system.
Fig. 17 is an explanatory diagram depicting a specific example of the operation of the information processing system.
Fig. 18 is an explanatory diagram depicting a specific example of the operation of the information processing system.
Fig. 19 is an explanatory diagram depicting a specific example of the operation of the information processing system.
Fig. 20 is an explanatory diagram depicting a specific example of the operation of the information processing system.
Fig. 21 is an explanatory diagram depicting an example of effects of the information processing system.
Fig. 22 is an explanatory diagram depicting an example of effects of the information processing system.
Fig. 23 is an explanatory diagram depicting an example of effects of the information processing system.
Fig. 24 is an explanatory diagram depicting an example of effects of the information processing system.
Fig. 25 is an explanatory diagram depicting an example of effects of the information processing system.
Fig. 26 is an explanatory diagram depicting an example of effects of the information processing system.
Fig. 27 is a flowchart depicting an example of a procedure of a first preparation process.
Fig. 28 is a flowchart depicting an example of a procedure of a second preparation process.
Fig. 29 is a flowchart depicting an example of a procedure of a third preparation process.
Fig. 30 is a flowchart depicting an example of a procedure of a fourth preparation process.
Fig. 31 is a flowchart depicting an example of a procedure of an overall process.
Fig. 32 is a flowchart depicting an example of a procedure of a decoding process.
Fig. 33 is a flowchart depicting an example of the procedure of the decoding process.

### BEST MODE(S) FOR CARRYING OUT THE INVENTION

Embodiments of an information processing program, an information processing method, an information processing device, and a system according to the present invention will be explained below in detail with reference to the accompanying drawings.

### (Example of Information Processing Method According to Embodiment)

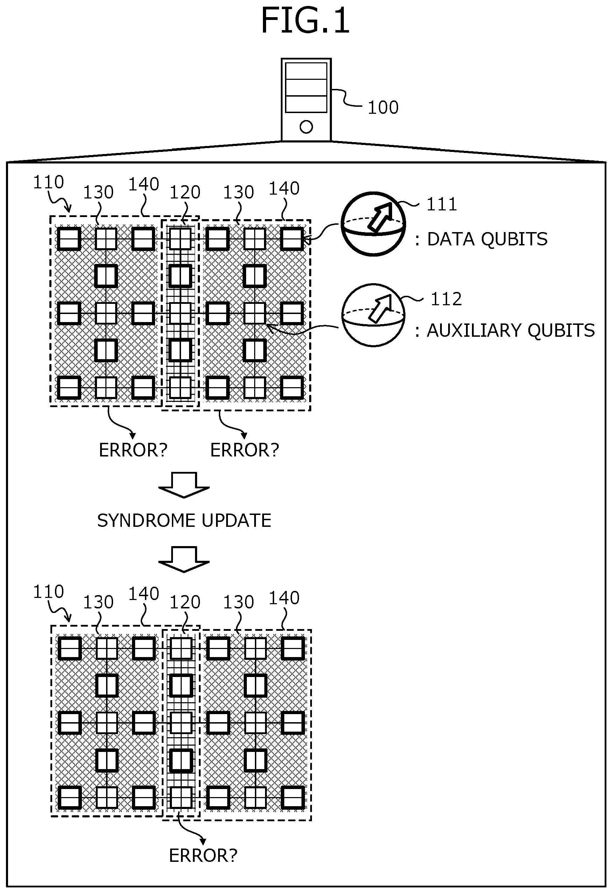

Fig. 1 is an explanatory diagram depicting an example of an information processing method according to an embodiment. The information processing device 100 is a computer for facilitating detection of a data qubit in which an error has occurred. The information processing device 100 is, for example, a server or a personal computer (PC).

In the field of quantum computers, the probability of errors occurring in data qubits representing data tends to increase due to environmental noise, interference of other data qubits, noise during operation of data qubits, and the like.

Therefore, it is desirable to be able to detect and correct an error occurring in a data qubit.

For example, there is a logical qubit in which a data qubit is made redundant. Redundancy is realized by, for example, a technique called surface code. Specifically, there is a logical qubit in which multiple data qubits and multiple auxiliary qubits are arranged in a two-dimensional lattice shape such that the auxiliary qubits are present at intersections of the two-dimensional lattice shape and the auxiliary qubits and the data qubits are alternately arranged along line segments of the two-dimensional lattice shape. Multiple data qubits forming a logical qubit represent one piece of data as a whole. For the surface code, for example, the following Reference Document 1 can be referred to.

Reference Document 1: Kitaev, A. Yu. "Fault-tolerant quantum computation by anyons." Annals of physics 303.1 (2003): 2-30.

Here, there is a technique for detecting a data qubit in which an error has occurred, based on a syndrome of each of multiple auxiliary qubits in a logical qubit. The error is superimposition of noise on information. The syndrome is information of an auxiliary qubit to which information of an adjacent data qubit is transferred through a two-qubit operation.

For example, it is conceivable to detect a data qubit in which an error has occurred by searching for a pattern of a data qubit in which an error has occurred, among multiple data qubits that reproduce a syndrome pattern of each auxiliary qubit. For example, detecting an erroneous data qubit may be referred to as "decoding".

Specifically, a technique (No. 1) of detecting a data qubit in which an error has occurred by searching for a pattern of the data qubit in which the error has occurred as a minimum weight perfect matching problem is conceivable. For this technique (No. 1), for example, the following Reference Document 2 can be referred to.

Reference Document 2: Edmonds, Jack. "Paths, trees, and flowers." Canadian Journal of mathematics 17 (1965): 449-467.

In addition, specifically, a technique (No. 2) of detecting a data qubit in which an error has occurred by searching for a pattern of a data qubit in which an error has occurred by Union-Find decoding is considered. For this technique (No. 2), for example, the following Reference Document 3 can be referred to.

Reference Document 3: Delfosse, Nicolas, and Naomi H. Nickerson. "Almost-linear time decoding algorithm for topological codes." Quantum 5 (2021): 595.

However, in the related art, it is difficult to detect a data qubit in which an error has occurred. For example, there is a problem in that as the number of data qubits increases, a processing time and a processing load necessary for detecting a data qubit in which an error has occurred increase.

Specifically, in the above-described technique (No. 1), the processing time becomes O(N^3). N is the number of qubits. Specifically, in the above-described technique (No. 2), although the processing time is O(N), an increase in the processing time and the processing load necessary when detecting the data qubit in which the error has occurred is unavoidable as the number of data qubits increases.

In addition, in a computer such as a field programmable gate array (FPGA), there may be a limitation in the size of a logical qubit that can be handled based on memory size and the number of processors. The computer may be, for example, an application specific integrated circuit (ASIC). In addition, since the processing time and the processing load necessary for detecting the data qubit in which the error has occurred increase, there is a problem in that it is difficult to handle an enormous number of logical qubits.

On the other hand, for example, a technique (No. 3) of allocating multiple divided regions obtained by dividing the entire region of the logical qubit to different classical computers using Message passing is considered. In this technique (No. 3), one classical computer handles one divided region.

Specifically, it is conceivable that the classical computer searches for a pattern of data qubits in which an error has occurred as a minimum weight perfect matching problem in a divided region allocated to the classical computer. Specifically, it is conceivable that a classical computer communicates with another classical computer, and when a contradiction occurs in a result of detecting a data qubit in which an error has occurred between divided regions, the classical computer again searches for a pattern of the data qubit in which the error has occurred. For example, the following Reference Document 4 can be referred to for this technique (No. 3).

Reference Document 4: Fowler, Austin G. "Minimum weight perfect matching of fault-tolerant topological quantum error correction in average $O(1)$ parallel time." arXiv preprint arXiv:1307.1740 (2013).

This technique (No. 3) has a problem in that it becomes more difficult to reduce the processing load and the processing time of the classical computer as the number of times of again searching for the pattern of the data qubit in which an error has occurred increases.

In addition, for example, a technique (No. 4) of segmenting a logical qubit, hierarchically reconstructing the logical qubit, and then searching for a pattern of a data qubit in which an error has occurred by a classical computer is conceivable. For this technique (No. 4), for example, the following Reference Document 5 can be referred to.

Reference Document 5: Duclos-Cianci, Guillaume, and David Poulin. "Fast decoders for topological quantum codes." Physical review letters 104.5 (2010): 050504.

This technique (No. 4) has a problem in that a pattern of data qubits in which an error has occurred logN times is searched for as a minimum weight perfect matching problem. Therefore, there is a problem in that it is difficult to reduce the processing load and the processing time of the classical computer.

In addition, for example, a technique (No. 5) in which multiple logical qubits are allocated to different classical computers and one logical qubit is handled by one classical computer is considered. Specifically, it is conceivable that the classical computer searches for a pattern of data qubits in which an error has occurred in one logical qubit allocated to the computer, as a minimum weight perfect matching problem. For this technique (No. 5), for example, the following Reference Document 6 can be referred to.

Reference Document 6: Ueno, Yosuke, et al. "QULATIS: A Quantum Error Correction Methodology toward Lattice Surgery." 2022 IEEE International Symposium on High-Performance Computer Architecture (HPCA). IEEE, 2022.

This technique (No. 5) has a problem in that it is difficult to apply the method to a case of performing an operation of simultaneously handling two or more logical qubits. In this technique (No. 5), when an operation of simultaneously handling two or more logical qubits is performed, the two or more logical qubits need to be collectively allocated to one classical computer. Therefore, there is a problem that it is difficult to reduce the processing load and the processing time of the classical computer.

In addition, for example, a technique (No. 6) of allocating multiple partially overlapping divided regions obtained by dividing the entire region of the logical qubit to different classical computers and handling one divided region by one classical computer is considered.

Specifically, it is conceivable to classify multiple classical computers into groups that can operate concurrently so that inconsistency does not occur in a result of detecting a data qubit in which an error has occurred in a region in which different divided regions overlap each other. Specifically, it is conceivable that sequentially for each group, a classical computer belonging to the group searches for a pattern of data qubits in which an error has occurred as a minimum weight perfect matching problem in a divided region allocated to the computer. For this technique (No. 6), for example, the following Reference Document 7 can be referred to.

Reference Document 7: Skoric, Luka, et al. "Parallel window decoding enables scalable fault tolerant quantum computation." arXiv preprint arXiv:2209.08552 (2022).

This technique (No. 6) has a problem in that it is difficult to apply when the number of syndromes representing errors in one divided region is an odd number. In this technique (No. 6), there is a problem in that the classical computer cannot search for the pattern of the data qubit in which an error has occurred when the number of syndromes representing the error in the divided region allocated to the computer is an odd number.

In addition, in this technique (No. 6), there is a problem in that multiple classical computers search for a pattern of data qubits in which an error has occurred at least three times as a whole as a minimum weight perfect matching problem. Therefore, there is a problem that it is difficult to reduce the processing load and the processing time of the classical computer.

Therefore, in the present embodiment, an information processing method capable of easily detecting a data qubit in which an error has occurred in a logical qubit will be described.

In Fig. 1, an information processing device 100 manages a logical qubit 110 in which multiple data qubits 111 and multiple auxiliary qubits 112 are arranged in a two-dimensional lattice. The logical qubit 110 includes, for example, a qubit set in which the auxiliary qubits 112 are present at intersections of a two-dimensional lattice and the auxiliary qubits 112 and the data qubits 111 are alternately arranged along line segments of the two-dimensional lattice.

Specifically, each auxiliary qubit 112 is for identifying a Z error. Here, in order to simplify the description, description of an auxiliary qubit (not depicted) for identifying an X error in the logical qubit 110 is omitted. The logical qubit 110 may include, for example, a qubit set in which multiple auxiliary qubits for identifying an X error are further arranged.

(1-1) The information processing device 100 obtains the syndrome of each of the multiple auxiliary qubits 112 in the logical qubit 110.

(1-2) The information processing device 100 identifies multiple divided regions 140 obtained by dividing the entire region of the logical qubit 110. Each divided region 140 includes, for example, one rectangular region 130 that is divided by a region 120 on a line segment in at least one of the vertical direction and the horizontal direction. The divided region 140 includes, for example, at least a partial region that, of the region 120, is adjacent to the rectangular region 130, the region 120 being among one or more regions 120 respectively on one or more line segments in at least one of the vertical direction and the horizontal direction. The divided region 140 shares with another divided region 140, for example, at least a partial region adjacent to the rectangular region 130, the partial region being of one of the one or more regions 120 respectively on one or more line segments in at least one of the vertical direction and the horizontal direction the region 120.

(1-3) In each divided region 140 of the identified multiple divided regions 140, the information processing device 100 determines, based on the obtained syndrome of each auxiliary qubit 112, the data qubit 111 in which it is to be judged that an error is occurring. The error is specifically a Z error. For example, the information processing device 100 searches for a pattern of the data qubit 111 in which the error has occurred, in each divided region 140 so as to reproduce the pattern of the syndrome of each auxiliary qubit 112 in the divided region 140.

In the following description, a data qubit 111 in which it is to be judged that an error is occurring may be simply referred to as "data qubit 111 to be judged to have an error". In addition, in the following description, the data qubit 111 for which it is to be judged that no error has occurred may be simply referred to as a "data qubit 111 to be judged not to have an error".

(1-4) The information processing device 100 updates the obtained syndrome of each auxiliary qubit 112 based on the determined data qubit 111 to be judged to have an error in the logical qubit 110. For example, in each divided region 140, the information processing device 100 identifies one or more first data qubits 111 overlapping or adjacent to a partial region shared with another divided region 140, the partial region being of the region 120 adjacent to the divided region 140. For example, in each divided region 140, the information processing device 100 identifies a first data qubit 111 determined as a data qubit 111 to be judged to have an error, among the identified one or more first data qubits 111.

For example, for each divided region 140, the information processing device 100 identifies among the multiple auxiliary qubits 112, the auxiliary qubit 112 adjacent to the first data qubit 111 determined as the identified data qubit 111 to be judged to have an error. For example, for each divided region 140, the information processing device 100 obtains a result of inverting the syndrome of the auxiliary qubit 112 identified among the multiple auxiliary qubits 112. The information processing device 100 updates the syndrome of each auxiliary qubit 112 by, for example, combining the obtained results by an OR operation.

Thus, the information processing device 100 can appropriately update the syndrome of each auxiliary qubit 112. The information processing device 100 can obtain a guideline for determining the data qubit 111 to be judged to have an error from among partial regions in the region 120 and respectively shared by the divided regions 140.

(1-5) The information processing device 100 determines the data qubit 111 to be judged to have an error in the partial region shared by the divided regions 140, based on the syndrome of each auxiliary qubit 112 after the update. For example, in the partial region shared by the divided regions 140, the information processing device 100 identifies each data qubit 111 present in a specific direction, starting from a syndrome indicating that an error has occurred.

The information processing device 100 determines the data qubit 111 to be judged to have an error by reversing whether each of the identified data qubits 111 is determined as an error. In the example depicted in Fig. 1, the specific direction is specifically a downward direction. In the following description, a syndrome indicating that an error has occurred may be simply referred to as a "syndrome indicating an error".

Accordingly, the information processing device 100 can appropriately determine the data qubit 111 to be judged to have an error from among the partial regions shared by the divided regions 140 in the region 120. As a result, the information processing device 100 can appropriately determine the data qubit 111 to be judged to have an error in the logical qubit 110.

The information processing device 100 can reduce the processing load and the processing time necessary to determine the data qubit 111 to be judged to have an error from among the logical qubits 110. For example, when the pattern of the data qubit 111 in which an error has occurred is searched for, the information processing device 100 can reduce the range that is searched to be smaller than the size of the entire logical qubit 110. Therefore, for example, the information processing device 100 can reduce the size of the problem, and can reduce the processing load and the processing time necessary when determining the data qubit 111 to be judged to have an error.

For example, the information processing device 100 can allow multiple computing units to execute, in parallel, arithmetic operations related to the respective divided regions 140. The computing units, for example, are computers different from the information processing device 100. The computing units may be, for example, processors included in the information processing device 100. Therefore, for example, the information processing device 100 can reduce the processing time necessary to determine the data qubit 111 to be judged to have an error from the logical qubits 110. Without directly obtaining the syndrome, the information processing device 100 may control the computing units so that the computing units obtain the syndromes of the auxiliary qubits 112.

Here, while a case has been described in which based on the auxiliary qubit 112 for identifying a Z error in the logical qubits 110, the information processing device 100 determines the data qubit 111 that is to be judged as having a Z error, the present invention is not limited hereto. For example, there may be a case where based on an auxiliary qubit (not depicted) for identifying an X error in the logical qubit 110, the information processing device 100 determines the data qubit 111 that is to be judged as having an X error.

Here, while a case in which the functions as the information processing device 100 are realized by a single computer has been described, the present invention is not limited hereto. For example, the functions of the information processing device 100 may be realized by cooperation of multiple computers. For example, the function of the information processing device 100 may be implemented on a cloud.

### (Example of Quantum Operation Control System 200)

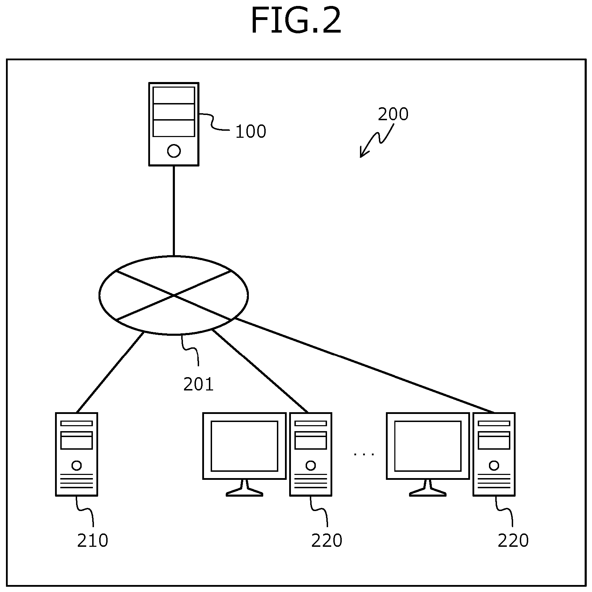

Next, an example of a quantum computation control system 200 to which the information processing device 100 depicted in Fig. 1 is applied will be described with reference to Fig. 2.

Fig. 2 is an explanatory diagram depicting an example of the quantum computation control system 200. In Fig. 2, the quantum operation control system 200 includes a quantum computing device 210, the information processing device 100, and multiple parallel processing devices 220.

In the quantum computation control system 200, the information processing device 100 and the quantum computation apparatus 210 are connected via a wired or wireless network 201. The network 201 is, for example, a local area network (LAN), a wide area network (WAN), the Internet, or the like. In the quantum computation control system 200, the information processing device 100 and the parallel processing devices 220 are connected via the wired or wireless network 201. In the quantum operation control system 200, the quantum computing device 210 and the parallel processing devices 220 are connected via the wired or wireless network 201.

The information processing device 100 is a computer for enabling detection and correction of an error occurring in a data qubit in a logical qubit. The logical qubit is present, for example, in the quantum computing device 210. The error is, for example, superimposition of noise on information.

The information processing device 100 receives a parameter representing a logical qubit from the quantum operation apparatus 210. The parameter representing a logical qubit indicates, for example, the arrangement of multiple data qubits and multiple auxiliary qubits in the logical qubit. The parameter representing a logical qubit indicates, for example, an index of a data qubit and an index of an auxiliary qubit in the logical qubit.

The information processing device 100 divides the entire region of the logical qubit into N divided regions on the basis of the received parameter representing the logical qubit, thereby specifying the N divided regions to be allocated to the N parallel processing devices 220. N is, for example, equal to or less than the number of parallel processing devices 220 in the quantum computation control system 200. Each divided region includes, for example, one rectangular region that is divided by a region on a line segment in at least one of the vertical direction and the horizontal direction in the entire region of the logical qubit. The divided region includes, for example, a region adjacent to the rectangular region included in the divided region among regions on each of one or more line segments in at least one of the vertical direction and the horizontal direction. The divided region shares with another divided region, for example, a region adjacent to the rectangular region included in the divided region among regions on each of one or more line segments in at least one of the vertical direction and the horizontal direction.

In the following description, a region that divides the overall region may be referred to as an "overlap region". The divided regions share at least a part of the overlap region. In the following description, of the divided regions, a rectangular region that is divided by a region on a line segment in at least one of the vertical direction and the horizontal direction and that is not shared by the divided regions, may be referred to as a "master region".

The information processing device 100 allocates the N divided regions to different parallel processing devices 220. For each divided region, the information processing device 100 transmits a parameter representing the divided region and a parameter representing the master region among the divided regions, to the parallel processing device 220 to which the divided region is allocated. The information processing device 100 transmits a parameter representing an overlap region that divides the overall region, to the parallel processing devices 220 to which the divided region is allocated.

The parameter indicating the divided region indicates, for example, the arrangement of one or more data qubits and one or more auxiliary qubits in the divided region. The parameter indicating the divided region indicates, for example, an index of the data qubit and an index of the auxiliary qubits in the divided region.

The parameter representing the master region indicates, for example, the arrangement of one or more data qubits and one or more auxiliary qubits in the master region. The parameter representing the master region indicates, for example, the index of the data qubit and the index of the auxiliary qubits in the master region.

The parameter representing the overlap region indicates, for example, the arrangement of one or more data qubits and one or more auxiliary qubits in the overlap region. The parameter indicating the overlap region indicates, for example, the index of the data qubits and the index of the auxiliary qubits in the overlap region. The information processing device 100 is, for example, a server or a personal computer (PC).

The quantum computing device 210 is a computer having one or more logical qubits. The quantum computing device 210 is, for example, a quantum computer having a qubit chip that realizes each logical qubit of one or more logical qubits. Quantum computing device 210 may be, for example, a classical computer with a simulator that implements one or more logical qubits.

The quantum computing device 210 transmits a parameter representing a logical qubit to the information processing device 100. The parameter representing the logical qubit indicates, for example, the arrangement of the multiple data qubits and the multiple auxiliary qubits in the logical qubit. The parameter representing the logical qubit indicates, for example, an index of the data qubits and an index of the auxiliary qubits in the logical qubit.

The quantum computing device 210 measures a syndrome of each of multiple auxiliary qubits in a logical qubit. The quantum computing device 210 transmits the measured syndromes of the respective auxiliary qubits to the respective parallel processing devices 220 of the N parallel processing devices 220. The quantum computing device 210 receives, from the parallel processing devices 220, a result of determining a data qubit to be judged as having an error. The quantum computing device 210 corrects the error occurring in the data qubit in the logical qubit based on the result of determining the data qubit judges as having an error.

Each of the parallel processing devices 220 is a computer for determining a data qubit to be judged as having an error, in a logical qubit. The parallel processing device 220 receives, from the information processing device 100, a parameter representing a divided region allocated to the parallel processing device 220, a parameter representing a master region among the divided regions, and a parameter representing an overlap region dividing the overall area. The parallel processing device 220 cooperates with the other parallel processing devices 220 to determine a data qubit to be judged as having an error in the divided region, based on the parameter indicating the divided region allocated to the parallel processing device 220. For example, based on the syndrome of the auxiliary qubit, the parallel processing device 220 determines in the divided region allocated to thereto, the data qubit to be judged as having an error.

The parallel processing device 220 updates the syndrome of the auxiliary qubit based on the determined data qubit that is to be judged as having as an error. For example, the parallel processing device 220 obtains a result of inverting the syndrome of the auxiliary qubit adjacent to the data qubit overlapping or adjacent to the overlap region, among the determined data qubits that are to be judged as having an error, and delivers the result to the other parallel processing devices 220. The parallel processing device 220 updates the syndromes of the respective auxiliary qubits by, for example, combining the results of inverting the syndromes of the auxiliary qubits in the respective parallel processing devices 220 by an OR operation.

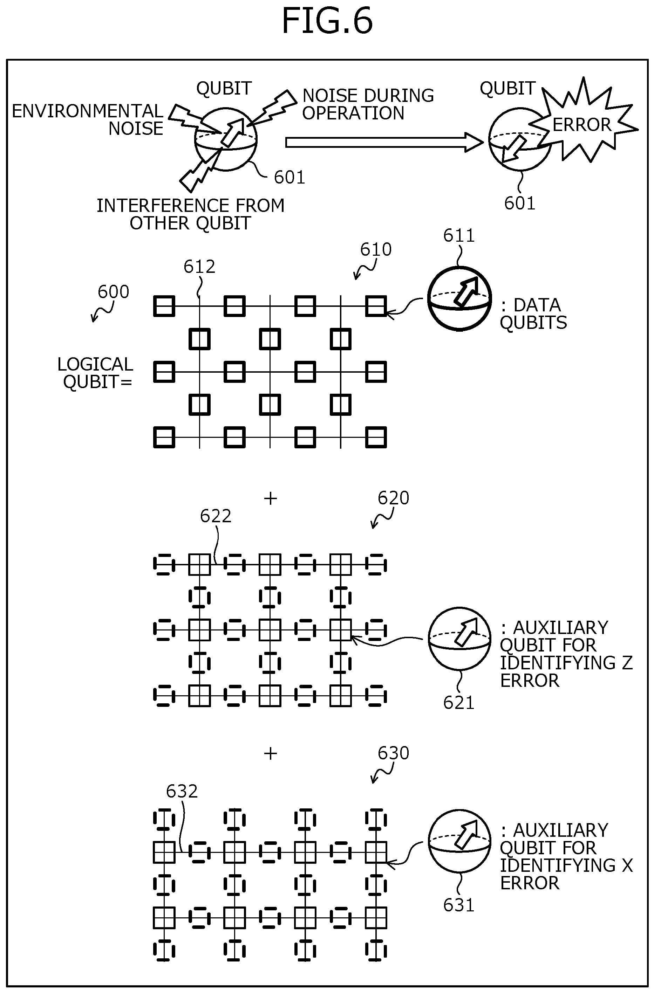

The parallel processing device 220 determines based on the syndrome of each auxiliary qubit after updating, a data qubit that is to be judged as having an error in the overlap region, which divides the overall region. The parallel processing devices 220 transmits, to the quantum computing device 210, a result of determining a data qubit that is to be judged as having an error in the divided region and the overlap region. The parallel processing device 220 transmits, for example, an index of a data qubit determined as an error to the quantum computing device 210. The parallel processing device 220 is, for example, a server or a PC. A specific example of detailed operation of the parallel processing devices 220 will be described later with reference to Figs. 6 to 33.

Here, while a case has been described in which the information processing device 100 is a device different from the quantum computing device 210, the present invention is not limited hereto. For example, the information processing device 100 may have a function as the quantum computing device 210 and may also operate as the quantum computing device 210.

Here, while a case has been described in which the information processing device 100 is an apparatus different from the parallel processing devices 220, the present invention is not limited hereto. For example, the information processing device 100 may have a function as the parallel processing devices 220 and may also operate as the parallel processing devices 220.

In the following description, an i-th parallel processing device 220 may be referred to as a "parallel processing device 22i" in a distinguishable manner.

### (Example of Hardware Configuration of Information Processing Device 100)

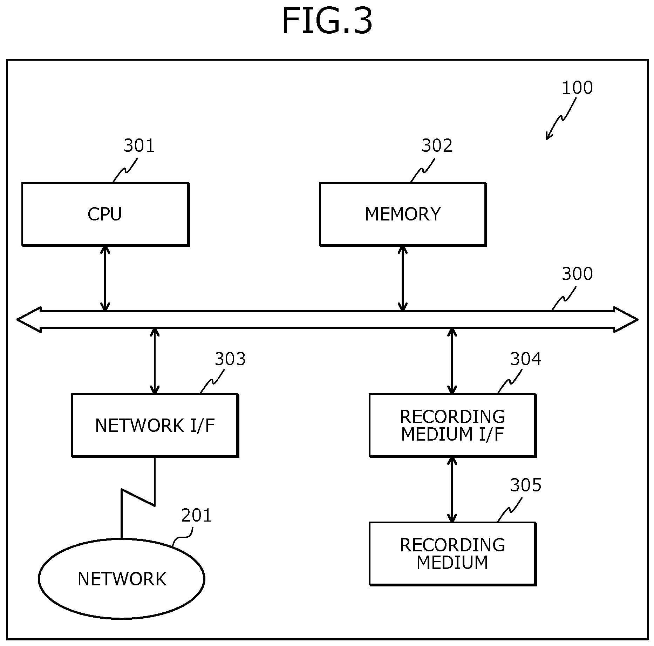

Next, an example of a hardware configuration of the information processing device 100 is described with reference to Fig. 3.

Fig. 3 is a block diagram of an example of a hardware configuration of the information processing device 100. In Fig. 3, the information processing device 100 has a central processing unit (CPU) 301, a memory 302, a network interface (I/F) 303, a recording medium I/F 304, and a recording medium 305. Further, the components are connected to each other by a bus 300.

Here, the CPU 301 governs overall control of the information processing device 100. The memory 302, for example, includes a read-only memory (ROM), a random-access memory (RAM), and a flash-ROM. In particular, for example, the flash-ROM and/or ROM stores therein various programs and the RAM is used as a work area of the CPU 301. Programs stored to the memory 302 are loaded onto the CPU 301, whereby encoded processes are executed by the CPU 301.

The network I/F 303 is connected to the network 201 via a communications line and is connected to other computers through the network 201. Further, the network I/F 303 administers an internal interface with the network 201 and controls the input and output of data with respect to the other computers. The network I/F 303, for example, is a modem, a LAN adapter, or the like.

The recording medium I/F 304 controls the reading and writing of data with respect to the recording medium 305 under the control of the CPU 301. The recording medium I/F 304 is, for example, a disk drive, a solid-state drive (SSD), a universal serial bus (USB) port, or the like. The recording medium 305 is a nonvolatile memory storing data written thereto under the control of the recording medium I/F 304. The recording medium 305 is, for example, a disk, a semiconductor memory, a USB memory, or the like. The recording medium 305 may be removable from the information processing device 100.

In addition to the components above, the information processing device 100 may include, for example, a keyboard, a mouse, a display, a printer, a scanner, a microphone, a speaker, etc. Further, the information processing device 100 may further have the recording medium I/F 304 and/or the recording medium 305 in plural. The information processing device 100 may omit the recording medium I/F 304 and/or the recording medium 305.

### (Example of Hardware Configuration of Quantum Computing Device 210)

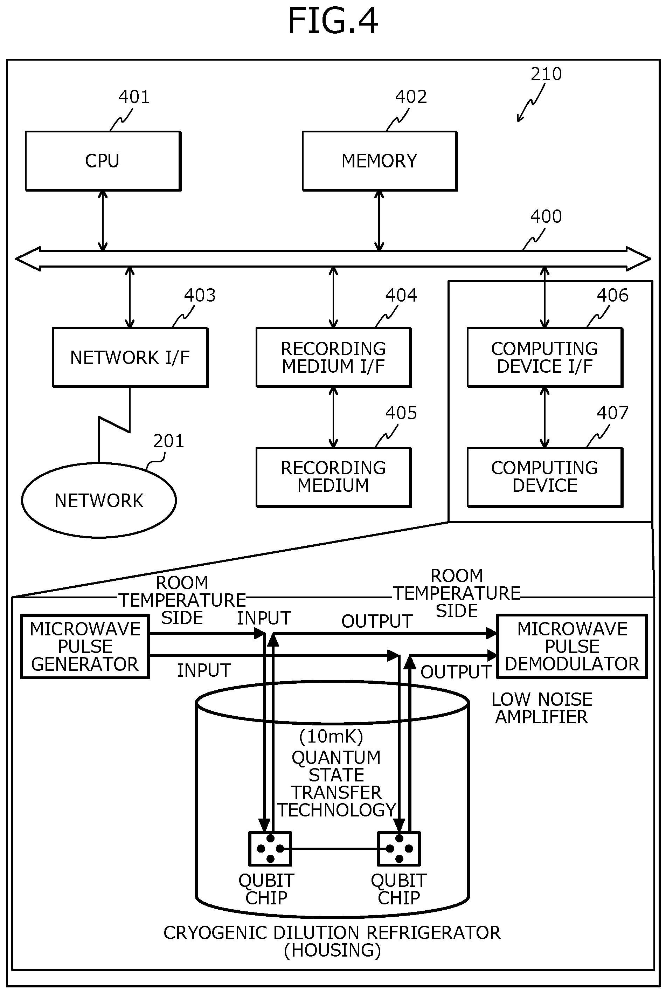

Next, with reference to Fig. 4, an example a hardware configuration of the quantum computing device 210 is described.

Fig. 4 is a block diagram depicting an example of a hardware configuration of the quantum computing device 210. In Fig. 4, the quantum computing device 210 has a CPU 401, a memory 402, a network I/F 403, a recording medium I/F 404, and a recording medium 405. The quantum computing device 210 further has a computing device I/F 406 and a computing device 407. Further, the components are coupled by a bus 400.

Here, the CPU 401 governs overall control of the quantum computing device 210. The memory 402 includes, for example, a ROM, a RAM, and a flash ROM. For example, the flash ROM and the ROM store various programs, and the RAM is used as a work area for the CPU 401. The programs stored in the memory 402 are loaded onto the CPU 401, whereby the CPU 401 executes encoded processes.

The network I/F 403 is coupled to the network 201 through a communications line and is coupled to other computers via the network 201. The network I/F 403 administers an internal interface with the network 201 and controls the input and output of data from other computers. The network I/F 403 is, for example, a modem or a LAN adapter.

The recording medium I/F 404 controls the reading and writing of data with respect to the recording medium 405 under the control of the CPU 401. The recording medium I/F 404 is, for example, a disk drive, an SSD, a USB port, etc. The recording medium 405 is a nonvolatile memory that stores therein data written thereto under the control of the recording medium I/F 404. The recording medium 405 is, for example, a disk, a semiconductor memory, a USB memory, etc. The recording medium 405 may be removable from the quantum computing device 210.

The computing device I/F 406 controls access to the computing device 407 under the control of the CPU 401. The computing device I/F 406 converts signals output from the CPU 401 into input signals for the computing device 407 using a microwave pulse generator and transmits the converted signals to the computing device 407. The computing device I/F 406 converts the signals output from the computing device 407 into input signals for the CPU 401 using a microwave pulse demodulator and transmits the converted signals to the CPU 401. The computing device 407 is a computing device equipped with one or more qubit chips cooled to an extremely low temperature of 10 mK. Each qubit chip represents, for example, a logical qubit. The computing device 407 performs a predetermined computation according to an input signal using one or more qubit chips, and outputs an output signal corresponding to the result of performing the predetermined computation.

In addition to the components above, the quantum computing device 210 may have, for example, a keyboard, a mouse, a display, a printer, a scanner, a microphone, a speaker, etc. The quantum computing device 210 may also have the recording medium I/F 404 and recording medium 405 in plural. Further, in the quantum computing device 210, the recording medium I/F 404 and the recording medium 405 may be omitted.

An example of a hardware configuration of the parallel processing devices 220 is, for example, similar to the example of the hardware configuration of the information processing device 100 depicted in Fig. 3 and thus, description thereof is omitted.

### (Example of Functional Configuration of Information Processing Apparatus 100)

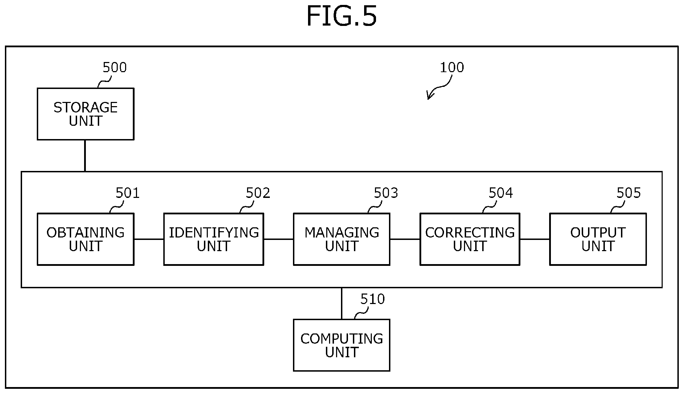

Next, an example of a functional configuration of the information processing device 100 will be described with reference to Fig. 5.

Fig. 5 is a block diagram depicting a functional configuration example of the information processing device 100. The information processing device 100 includes a storage unit 500, an obtaining unit 501, an identifying unit 502, a managing unit 503, a correcting unit 504, and an output unit 505. Multiple computing units 510 exist outside the information processing device 100.

The storage unit 500 is implemented by, for example, a storage area such as the memory 302 or the recording medium 305 depicted in Fig. 3. Hereinafter, while a case in which the storage unit 500 is included in the information processing device 100 will be described, the present invention is not limited hereto. For example, the storage unit 500 may be included in a device different from the information processing device 100, and the storage content of the storage unit 500 may be referable from the information processing device 100.

The obtaining unit 501 to the output unit 505 function as an example of a controller. Specifically, the functions of the obtaining unit 501 to the output unit 505 are realized, for example, by causing the CPU 301 to execute a program stored in a storage area such as the memory 302 or the recording medium 305 depicted in Fig. 3 or by the network I/F 303. Processing results of the functional units are stored to, for example, a storage area such as the memory 302 or the recording medium 305 depicted in Fig. 3.

The storage unit 500 stores various types of information referred to or updated in the processes by the functional units. The storage unit 500 stores, for example, an arrangement of multiple data qubits and multiple auxiliary qubits in a logical qubit. The multiple data qubits represent one piece of data as a whole, for example. Any of the auxiliary qubits is, for example, for identifying a Z error. Any of the auxiliary qubits is used for identifying an X error, for example.

The logical qubit includes, for example, a first qubit set in which multiple data qubits and multiple auxiliary qubits for identifying a Z error are arranged in a two-dimensional lattice shape. Specifically, the logical qubit includes a first qubit set in which auxiliary qubits for identifying a Z error are present at intersections of a first lattice shape, and the auxiliary qubits for identifying a Z error and data qubits are alternately arranged along line segments of the first lattice shape. Specifically, the logical qubit includes a first qubit set in which auxiliary qubits for identifying a Z error and data qubits are alternately arranged on a line segment in the horizontal direction of the first lattice shape starting from the data qubit.

The logical qubit includes, for example, a second qubit set in which multiple data qubits and multiple auxiliary qubits for identifying an X error are arranged in a two-dimensional lattice shape. The second qubit set shares multiple data qubits with the first qubit set. Specifically, the logical qubit includes a second qubit set in which auxiliary qubits for X error identification are present at intersections of a second lattice shape, and the auxiliary qubits for X error identification and data qubits are alternately arranged on each line segment of the second lattice shape. The first lattice shape assumed in the first qubit set and the second lattice shape assumed in the second qubit set are two-dimensional lattice shapes shifted from each other. Specifically, the logical qubit includes a second qubit set in which auxiliary qubits for X error identification and data qubits are alternately arranged starting from the data qubit on a line segment in the vertical direction of the second lattice shape.

Specifically, the storage unit 500 stores the arrangement of the multiple data qubits, the multiple auxiliary qubits for identifying a Z error, and the multiple auxiliary qubits for identifying an X error in the logical qubit. The arrangement is obtained by, for example, the obtaining unit 501.

The storage unit 500 stores, for example, an index of each data qubit in the logical qubit. The storage unit 500 stores, for example, an index of each auxiliary qubit for identifying a Z error in the logical qubit. The storage unit 500 stores, for example, an index of each auxiliary qubit for identifying an X error in the logical qubit. The index is obtained by, for example, the obtaining unit 501.

The obtaining unit 501 obtains various types of information used for the processes performed by the functional units. The obtaining unit 501 stores the obtained various types of information to the storage unit 500 or outputs the obtained various types of information to the functional units. The obtaining unit 501 may output various types of information stored in the storage unit 500 to the functional units. The obtaining unit 501 obtains various types of information based on, for example, an operation input of a user. For example, the obtaining unit 501 may receive various types of information from an apparatus different from the information processing device 100.

The obtaining unit 501 obtains, for example, a processing request. The processing request may include, for example, an arrangement of multiple data qubits, multiple auxiliary qubits for identifying a Z error, and multiple auxiliary qubits for identifying an X error in a logical qubit. The processing request may include, for example, indices of the data qubits, the auxiliary qubits for identifying a Z error, and the auxiliary qubits for identifying an X error in the logical qubit. Specifically, the obtaining unit 501 obtains the processing request by receiving the processing request from another computer. The other computer is, for example, the quantum computing device 210. Specifically, the obtaining unit 501 may obtain the processing request by receiving an input of the processing request, based on an operation input of the user.

The obtaining unit 501 obtains, for example, an arrangement of multiple data qubits, multiple auxiliary qubits for identifying a Z error, and multiple auxiliary qubits for identifying an X error in a logical qubit. Specifically, the obtaining unit 501 obtains the arrangement by extracting the arrangement from the obtained processing request. Specifically, the obtaining unit 501 may obtain the arrangement by receiving the arrangement from another computer. The other computer is, for example, the quantum computing device 210. Specifically, the obtaining unit 501 may obtain the arrangement by receiving an input of the arrangement, based on an operation input of the user.

The obtaining unit 501 obtains, for example, indices of the data qubits, the auxiliary qubits for identifying a Z error, and the auxiliary qubits for identifying an X error in the logical qubit. Specifically, the obtaining unit 501 obtains the indices by extracting the indices from the obtained processing request. Specifically, the obtaining unit 501 obtains the indices by receiving the indices from another computer. The other computer is, for example, the quantum computing device 210. Specifically, the obtaining unit 501 may obtain the indices by receiving an input of the indices, based on an operation input of the user.

The obtaining unit 501 may receive a start trigger for starting the processes of any functional unit. The start trigger is, for example, a predetermined operation input by the user. The start trigger may be, for example, reception of predetermined information from another computer. The start trigger may be, for example, output of predetermined information by any functional unit. Specifically, the obtaining unit 501 regards obtaining the processing request as a start trigger for starting the processes of the identifying unit 502 and the managing unit 503.

The identifying unit 502 identifies multiple divided regions obtained by dividing an entire region of the logical qubit by referring to the storage content of the storage unit 500. Each divided region includes one rectangular region that is divided by a region on a line segment in at least one of the vertical direction and the horizontal direction in the entire region of the logical qubit. The divided region includes a shared region adjacent to the rectangular region included in the divided region, among regions on a line segment in at least one of the vertical direction and the horizontal direction, and the shared region being is shared with another of the divided regions.

The identifying unit 502 identifies, for example, multiple first divided regions for Z error identification obtained by dividing an entire region of the logical qubit. Specifically, the identifying unit 502 divides the entire region by regions along line segments in at least one of the vertical direction and the horizontal direction of the first grid pattern, and identifies multiple first rectangular regions. Specifically, based on the first rectangular regions, the identifying unit 502 identifies multiple first divided regions each including a different first rectangular region and including a first shared region adjacent to the first rectangular region, among regions on the line segment in at least one of the vertical direction and the horizontal direction. Accordingly, the identifying unit 502 can identify first divided regions to be allocated to the computing unit 510.

The identifying unit 502 identifies, for example, multiple second divided regions for X error identification obtained by dividing an entire region of the logical qubit. Specifically, the identifying unit 502 divides the entire region by regions along line segments in at least one of the vertical direction and the horizontal direction of the first grid pattern, and identifies multiple second rectangular regions. Specifically, the identifying unit 502 identifies, based on the second rectangular regions, multiple second divided regions each including a different second rectangular region and including a second shared region adjacent to the second rectangular region, among regions on the line segment in at least one of the vertical direction and the horizontal direction. Accordingly, the identifying unit 502 can identify second divided regions to be allocated to the computing unit 510.

The managing unit 503 allocates the divided regions identified by the identifying unit 502 to different computing units 510. The managing unit 503 controls each of the computing units 510 so as to determine a data qubit that is to be judged as having an error in the divided region allocated to the each of the computing units 510.

For example, the managing unit 503 allocates the first divided regions identified by the identifying unit 502 to different computing units 510. For example, the managing unit 503 controls each of the computing units 510 so as to determine a data qubit that is to be judged as having a Z error in the first divided region allocated to the each of the computing units 510.

Specifically, the managing unit 503 transmits to the computing unit 510, the arrangement and the index of the data qubit and the auxiliary qubit for identifying a Z error in the first divided region allocated to the each of the computing units 510. Accordingly, the managing unit 503 controls the multiple computing units 510 as follows. The managing unit 503 can easily determine a data qubit that is to be judged as having a Z error.

Specifically, the managing unit 503 controls the multiple computing units 510 so as to determine the data qubit that is to be judged as having a Z error from each of the first divided regions, based on the syndrome of each of the auxiliary qubits for identifying a Z error. Specifically, the computing unit 510 determines a data qubit that is to be judged as having a Z error from the first divided region allocated to the computing unit 510, according to a predetermined search method. The predetermined search method is, for example, a solution of a minimum weight perfect matching problem. Each of the multiple computing units 510 distributes the index of the determined data qubit to be judged as having a Z error to the other computing units 510.

For example, the managing unit 503 allocates the second divided regions identified by the identifying unit 502 to different computing units 510. For example, the managing unit 503 controls each of the computing units 510 so as to determine a data qubit that is to be judged as having an X error in the second divided region allocated to the each of the computing units 510.

Specifically, the managing unit 503 transmits to the computing unit 510, the arrangement and the index of the data qubit and the auxiliary qubit for identifying an X error in the second divided region allocated to the each of the computing units 510. Accordingly, the managing unit 503 controls the multiple computing units 510 as follows. The managing unit 503 can easily determine a data qubit that is to be judged as having an X error.

Specifically, the managing unit 503 controls the multiple computing units 510 so as to determine the data qubit that is to be judged as having an X error from each of the second divided regions, based on the syndrome of each of the auxiliary qubits for identifying an X error. Specifically, the computing unit 510 determines a data qubit that is to be judged as having an X error from the second divided region allocated to the computing unit 510, according to a predetermined search method. The predetermined search method is, for example, a solution of a minimum weight perfect matching problem. Each of the multiple computing units 510 distributes the index of the determined data qubit to be judged as having an X error to the other computing units 510.

The managing unit 503 allocates all of the shared areas to the computing units 510. The managing unit 503 controls the computing units 510 so as to determine a data qubit that is to be judged as having an error in all of the multiple shared regions.

Specifically, the managing unit 503 controls each of the computing units 510 so as to update the syndrome of each auxiliary qubit for Z error identification based on the data qubit judged as having a Z error in the logical qubit. Specifically, the computing unit 510 updates the syndrome of each auxiliary qubit for identifying a Z error.

More specifically, the computing unit 510 determines whether there is a first data qubit that is determined as a data qubit to be judged as having a Z error and that overlaps or is adjacent to a first shared region shared by the first divided region allocated thereto and another first divided region. More specifically, when it is determined that the first data qubit is present, the computing unit 510 inverts the syndrome of the auxiliary qubit for Z error identification, the inverted auxiliary qubit being adjacent to the first data qubit among the multiple auxiliary qubits for Z error identification.

More specifically, the computing unit 510 obtains the syndrome of each of the auxiliary qubits for identifying a Z error after the inversion, and distributes the syndromes to the other computing units 510. More specifically, after inverting the auxiliary qubits, the computing unit 510 combines, by an OR operation, the syndromes of the inverted auxiliary qubits for identifying a Z error and the syndromes of the auxiliary qubits for identifying a Z error after inversion thereof by the other computing unit 510, and thereby updates the syndromes.

Specifically, the computing unit 510 determines a data qubit to be judged as having a Z error from among all of the multiple shared regions, based on the updated syndrome of each auxiliary qubit for identifying a Z error. More specifically, the computing unit 510 identifies a combined region obtained by combining the first shared regions.

More specifically, the computing unit 510 identifies a path toward a specific side of the identified combined region from each syndrome representing the Z error in the identified combined region, based on the updated syndrome of each auxiliary qubit for identifying a Z error. The specific side is, for example, the right side. The specific side may be, for example, the left side. The specific side may be, for example, an upper side or a lower side. More specifically, the computing unit 510 inverts the data qubits not judged as having a Z error and the data qubits judged as having a Z error along each of the identified paths. Accordingly, the managing unit 503 can determine a data qubit to be judged as having a Z error in each of the first shared regions.

More specifically, the computing unit 510 may select one of the two or more sides of the identified combined region, the selected one having the smallest number of data qubits to be determined as a Z error, based on the syndromes of the auxiliary qubits for Z error identification after the update. More specifically, the computing unit 510 provisionally determines data qubits to be judged as having a Z error for each of the two or more sides of the identified combined region, and selects the side for which the number of data qubits to be determined as a Z error is the smallest.

More specifically, on the path toward the selected side from each of the syndromes representing a Z error in the identified combined region, the computing unit 510 inverts data qubits that are not to be judged as having a Z error and data qubits that are to be judged as having a Z error. Accordingly, the managing unit 503 can determine the data qubit to be judged as having a Z error in each of the first shared regions.

Specifically, the managing unit 503 controls each of the computing units 510 so as to update the syndrome of each auxiliary qubit for X error identification based on the data qubit judged as having an X error in the logical qubit. Specifically, the computing unit 510 updates the syndrome of each auxiliary qubit for identifying an X error.

More specifically, the computing unit 510 determines whether there is a second data qubit that is determined as a data qubit to be judged as having an X error and that overlaps or is adjacent to a second shared region shared by the second divided region allocated thereto and another second divided region. More specifically, when it is determined that the second data qubit is present, the computing unit 510 inverts the syndrome of the auxiliary qubit for X error identification, the inverted auxiliary qubit being adjacent to the second data qubit among the multiple auxiliary qubits for X error identification.

More specifically, the computing unit 510 obtains the syndrome of each of the auxiliary qubits for identifying an X error after the inversion, and distributes the syndromes to the other computing units 510. More specifically, after inverting the auxiliary qubits, the computing unit 510 combines, by an OR operation, the syndromes of the inverted auxiliary qubits for identifying an X error and the syndromes of the auxiliary qubits for identifying an X error after inversion thereof by the other computing unit 510, and thereby updates the syndromes.

Specifically, the computing unit 510 determines a data qubit to be judged as having an X error from among all of the multiple shared regions, based on the updated syndrome of each auxiliary qubit for identifying an X error. More specifically, the computing unit 510 identifies a combined region obtained by combining the second shared regions.

More specifically, the computing unit 510 identifies a path toward a specific side of the identified combined region from each syndrome representing the X error in the identified combined region, based on the updated syndrome of each auxiliary qubit for identifying an X error. The specific side is, for example, the right side. The specific side may be, for example, the left side. The specific side may be, for example, an upper side or a lower side. More specifically, the computing unit 510 inverts the data qubits not judged as having an X error and the data qubits judged as having an X error along each of the identified paths. Accordingly, the managing unit 503 can determine a data qubit to be judged as having an X error in each of the second shared regions.

More specifically, the computing unit 510 may select one of the two or more sides of the identified combined region, the selected one having the smallest number of data qubits to be determined as an X error, based on the syndromes of the auxiliary qubits for X error identification after the update. More specifically, the computing unit 510 provisionally determines data qubits to be judged as having an X error for each of the two or more sides of the identified combined region, and selects the side for which the number of data qubits to be determined as an X error is the smallest. More specifically, on the path toward the selected side from each of the syndromes representing an X error in the identified combined region, the computing unit 510 inverts data qubits that are not to be judged as having an X error and data qubits that are to be judged as having an X error. Accordingly, the managing unit 503 can determine the data qubit to be judged as having an X error in each of the second shared regions.

On any line segment of the two-dimensional lattice shape, when the number of data qubits to be judged as having a Z error is at least equal to a first threshold value, the correcting unit 504 inverts, on the line segment, the data qubits not to be judged as having a Z error and the data qubits to be judged as having a Z error. Any of the line segments is, for example, a horizontal line segment. The first threshold is set in advance by the user, for example. Accordingly, the correcting unit 504 can improve the accuracy of correcting a Z error.

On any line segment of the two-dimensional lattice shape, when the number of data qubits to be judged as having an X error is at least equal to a second threshold value, the correcting unit 504 inverts, on the line segment, the data qubits not to be judged as having an X error and the data qubits to be judged as having an X error. Any of the line segments is, for example, a vertical line segment. The first threshold is set in advance by the user, for example. Accordingly, the correcting unit 504 can improve the accuracy of correcting an X error.

The output unit 505 outputs a processing result of at least one of the functional units. The output format is, for example, display on a display, print output to a printer, transmission to an external device by the network I/F 303, or storage to a storage area such as the memory 302 or the recording medium 305. Accordingly, the output unit 505 can notify the user of a processing result of at least one of the functional units, and can support management and operation of the information processing device 100, for example, update of a setting value of the information processing device 100, and can improve convenience of the information processing device 100.

The output unit 505 outputs, for example, a result of determining a data qubit to be judged as having an error. Specifically, the output unit 505 outputs the result of determining the data qubit judged as having a Z error so that the user can refer to the result. Specifically, the output unit 505 transmits the result of determining the data qubit to be judged as having a Z error to another computer. The other computer is, for example, the quantum computing device 210. Accordingly, the output unit 505 can make the result of determining the data qubit judged as having a Z error available to the outside.

Specifically, the output unit 505 outputs the result of determining the data qubit that is to be judged as having an X error so that the user can refer to the result. Specifically, the output unit 505 transmits the result of determining the data qubit that is to be judged as having an X error to another computer. The other computer is, for example, the quantum computing device 210. Accordingly, the output unit 505 can make the result of determining the data qubit that is to be judged as having an X error available to the outside.

Here, while a case in which the multiple computing units 510 exist outside the information processing device 100 has been described, the present invention is not limited hereto. For example, the information processing device 100 may include multiple computing units 510. Here, while a case where there are multiple computing units 510 has been described, the present invention is not limited hereto. For example, there may be only one computing unit 510.

Here, while a case in which the information processing device 100 includes the obtaining unit 501, the identifying unit 502, the managing unit 503, the correcting unit 504, and the output unit 505 has been described, the present invention is not limited hereto. For example, the information processing device 100 may omit any of the functional units. Specifically, the information processing device 100 may omit the correcting unit 504. The correcting unit 504 may be included in the quantum computing device 210, for example.

### (Example of Operation of Information Processing System)

Next, an example of the operation of an information processing system will be described with reference to Figs. 6 to 12. First, an example of a logical qubit 600 will be described with reference to Fig. 6.

Fig. 6 is an explanatory diagram depicting an example of the logical qubit 600. As depicted in Fig. 6, a qubit 601 tends to have a high probability of error occurrence due to environmental noise, interference from other data qubits, noise during operation of data qubits, and the like. The error is a superimposition of noise on the information of the qubit 601.

Therefore, the logical qubit 600 makes a data qubit 611 representing data redundant. The logical qubit 600 includes a data qubit set 610 in which multiple data qubits 611 are arranged in a two-dimensional lattice shape 612. For example, the logical qubit 600 includes the data qubit set 610 in which multiple data qubits 611 are arranged in the two-dimensional lattice shape 612 so that the data qubits 611 are present at positions other than intersections along line segments of the two-dimensional lattice shape 612.

The logical qubit 600 includes an auxiliary qubit set 620 in which multiple auxiliary qubits 621 for identifying a Z error are arranged in a two-dimensional lattice shape 622 with respect to the data qubit set 610. The logical qubit 600 includes, for example, an auxiliary qubit set 620 in which multiple auxiliary qubits 621 are arranged in the two-dimensional lattice shape 622 so that the auxiliary qubits 621 are present at intersections of the two-dimensional lattice shape 622. Specifically, the logical qubit 600 includes the auxiliary qubit set 620 formed such that the auxiliary qubits 621 and the data qubits 611 are arranged alternating each other, starting from a data qubit 611 on a horizontal line segment of the two-dimensional lattice 622.

In addition, the logical qubit 600 includes an auxiliary qubit set 630 in which multiple auxiliary qubits 631 for identifying an X error are arranged in a two-dimensional lattice shape 632 with respect to the data qubit set 610. The logical qubit 600 includes, for example, the auxiliary qubit set 630 in which the multiple auxiliary qubits 631 are arranged in the two-dimensional lattice shape 632 such that the auxiliary qubits 631 are present at intersections of the two-dimensional lattice shape 632. Specifically, the logical qubit 600 includes the auxiliary qubit set 630 formed such that the auxiliary qubits 631 and the data qubits 611 are arranged alternating each other, starting from a data qubit 611 on a vertical line segment of the two-dimensional lattice 632.

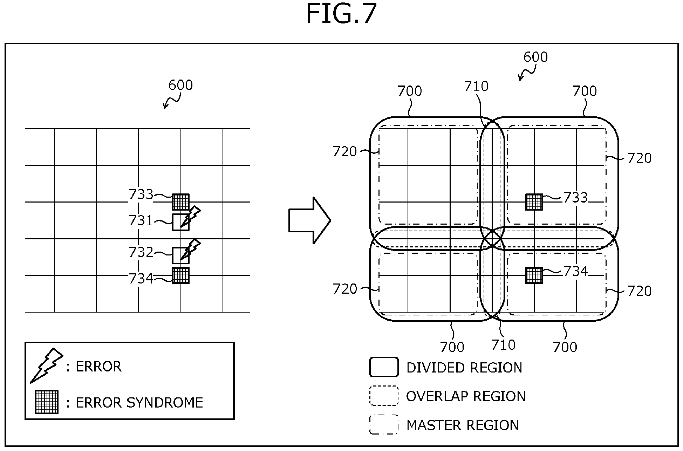

In the following description, for the sake of simplicity, an example of the operation of the information processing system based on the multiple auxiliary qubits 621 for identifying a Z error will be described. Here, an example in which the information processing system determines the data qubit 611 to be judged as having a Z error, based on the auxiliary qubit 621 for identifying a Z error will be described with reference to Figs. 7 to 11.

Figs. 7, 8, 9, 10, and 11 are explanatory diagrams depicting an example of determining the data qubit 611 to be judged as having a Z error. In Fig. 7, it is assumed that the data qubits 611 present at a position 731 and a position 732 among the logical qubits 600 are the data qubits 611 in which a Z error has actually occurred. In addition, it is assumed that the syndrome of the auxiliary qubit 621 for identifying a Z error present at the position 733 and the position 734 among the logical qubits 600 represents an error.

The information processing device 100 divides the entire region of the logical qubit 600 and thereby identifies multiple divided regions 700 that result. The divided regions 700 share, for example, at least a part of an overlap region 710. For example, each of the multiple divided regions 700 includes one different master region 720.

For example, the information processing device 100 identifies, as the master region 720, each of four rectangular regions divided by the overlap region 710 on one line segment in the vertical direction and the overlap region 710 on one line segment in the horizontal direction in the entire region. The information processing device 100 sets four divided regions 700 including different master regions 720 on the basis of the result of identifying the four master regions 720.

The information processing device 100 updates the four divided regions 700 by adding, to each of the set four divided regions 700, a partial region of the overlap region 710 adjacent to the master region 720 included in the divided region 700. As a result, the information processing device 100 can identify multiple divided regions 700 each including one master region 720 and sharing at least a part of the overlap region 710 in the divided regions 700.

In the following description, an i-th divided region 700 may be referred to as a "divided region 70i " in a distinguishable manner. Here, i is an integer of 1 or more. Here, i is an integer equal to or less than the number of divided regions 700.

In the following description, a j-th overlap region 710 may be referred to as an "overlap region 71j ". For example, a first overlap region 711 is an overlap region in the vertical direction. For example, a second overlap region 712 is a horizontal overlap region.

In the following description, the master region 720 included in the i-th divided region 700 may be referred to as a "master region 72i ". In the following description, in the divided regions 700, a partial region shared with another divided region 700 may be referred to as a "shared region".

The information processing device 100 controls the multiple parallel processing devices 220 so as to determine the data qubit 611 to be judged as having a Z error by allocating the multiple divided regions 700 to the different parallel processing devices 220.

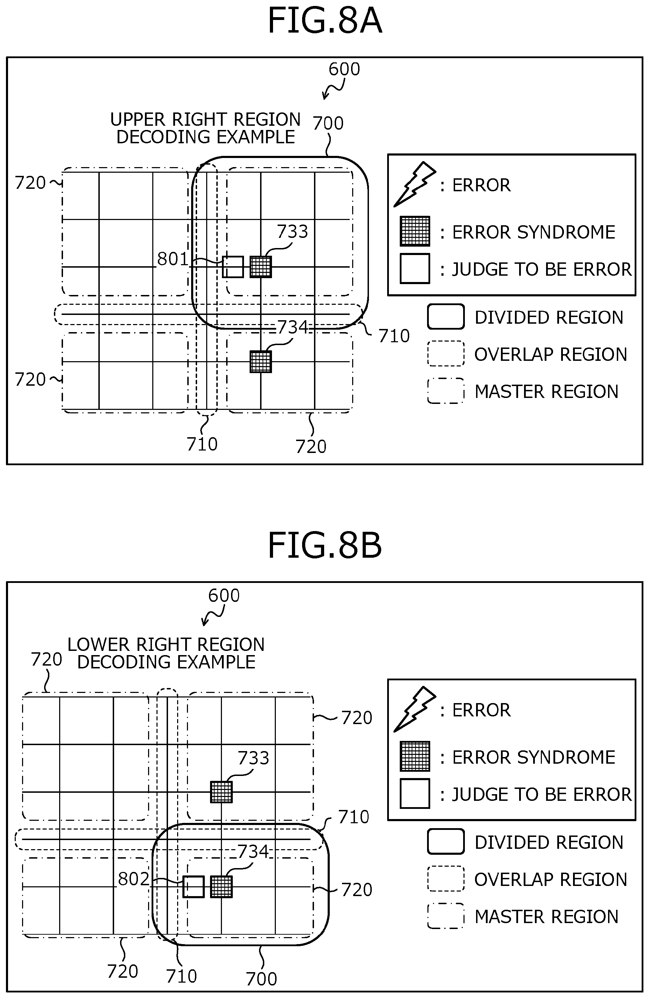

The information processing device 100 notifies each of the parallel processing devices 220 of the indices of the data qubit 611 and the auxiliary qubit 621 for Z error identification in the logical qubit 600. The information processing device 100 notifies the parallel processing device 220 of the indices of the data qubit 611 and the auxiliary qubit 621 for Z error identification in the divided region 700 allocated thereto. Accordingly, the information processing device 100 can allow the parallel processing device 220 to grasp the divided region 700 allocated thereto. Next, Fig. 8 will be described.

In Fig. 8, each parallel processing device 22i obtains, from the quantum computing device 210, the syndrome of each auxiliary qubit 621 in the divided region 70i allocated thereto. Each parallel processing device 22i determines the data qubit 611 to be judged as having a Z error in the divided region 70i, based on the obtained syndrome of each auxiliary qubit 621 in the divided region 70i allocated thereto.

Each parallel processing device 22i, for example, searches for a pattern of the data qubits 611 to be judged as having a Z error in the divided region 70i reproducing the obtained syndrome of each auxiliary qubit 621 as a minimum weight perfect matching problem. Accordingly, each parallel processing device 22i can determine the data qubit 611 that is to be judged as having a Z error in the divided region 70i allocated thereto.

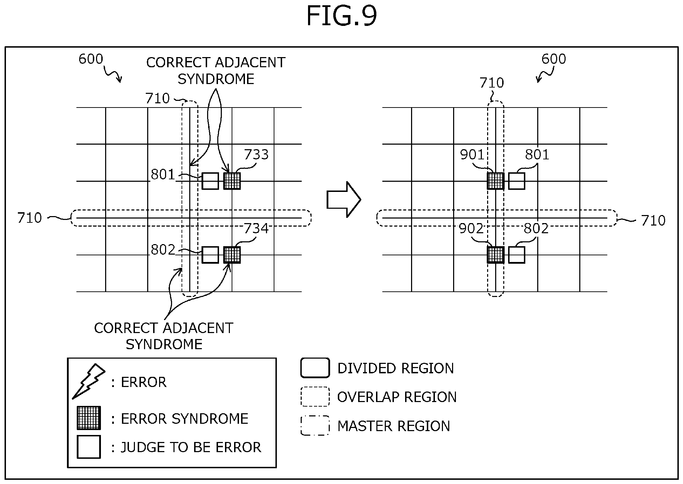

In the example depicted in Fig. 8, it is assumed that one of the parallel processing devices 22i to which the divided region 70i present at the upper right is allocated specifically determines the data qubit 611 present at the position 801 as the data qubit 611 to be judged as having a Z error. In addition, it is assumed that one of the parallel processing devices 22i to which the divided region 70i present at the lower right is allocated specifically determines the data qubit 611 present at the position 802 as the data qubit 611 to be judged as having a Z error. Next, Fig. 9 will be described.

In Fig. 9, each parallel processing device 22i updates the syndrome of each auxiliary qubit 621 in the divided region 70i based on the result of determining the data qubit 611 judged as having a Z error in the divided region 70i allocated thereto.

For example, each parallel processing device 22i identifies one or more data qubits 611 overlapping or adjacent to the shared region among the data qubits 611 judged as having a Z error in the divided region 70i allocated thereto. For example, each parallel processing device 22i inverts the syndrome of the auxiliary qubit 621 adjacent to the identified one or more data qubits 611 in the divided region 70i allocated thereto.

Each parallel processing device 22i distributes to the other parallel processing devices 22i, the syndrome of each auxiliary qubit 621 after inversion in the divided region 70i allocated thereto. Each parallel processing device 22i combines the inverted syndromes of the auxiliary qubits 621 in the divided regions 70i by an OR operation to update the syndromes of the auxiliary qubits 621 in the entire region.

In the example depicted in Fig. 9, the parallel processing device 22i to which the divided region 70i present at the upper right is allocated specifically inverts the syndromes of the auxiliary qubits 621 present at a position 901 and a position 733 adjacent to the position 801. Here, the syndrome of the auxiliary qubit 621 present at the position 901 represents a Z error. On the other hand, the syndrome of the auxiliary qubit 621 present at s position 733 does not represent the Z error.

Further, the parallel processing device 22i to which the divided region 70i present at the lower right is allocated specifically inverts the syndromes of the auxiliary qubits 621 present at a position 902 and a position 734 adjacent to the position 802. Here, the syndrome of the auxiliary qubit 621 present at the position 902 represents a Z error. On the other hand, the syndrome of the auxiliary qubit 621 present at s position 734 does not represent the Z error.

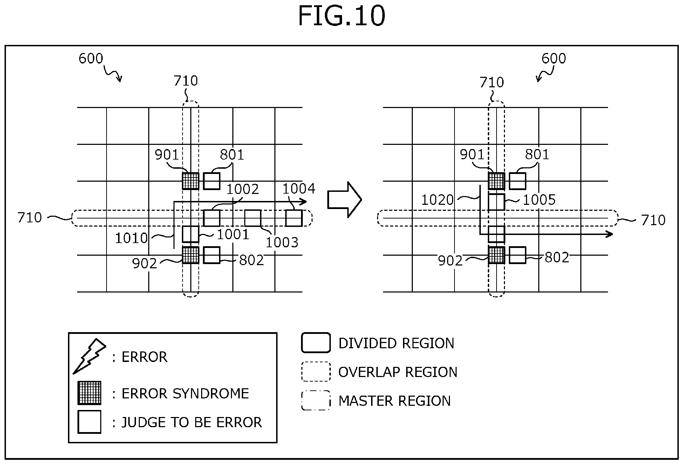

As a result, each parallel processing device 22i shares the respective syndromes of the updated auxiliary qubits 621 in the overall region, including the syndromes of the auxiliary qubits 621 present at positions 901 and 902, which represent Z errors. Thus, the parallel processing devices 22i can share the syndromes of the updated auxiliary qubits 621 in the entire region. Here, each parallel processing device 22i can individually invert the syndrome of the auxiliary qubit 621 in the divided region 70i. Each parallel processing device 22i can integrate, by an OR operation, the syndromes of the auxiliary qubits 621 that have been individually inverted and can appropriately update the syndromes of the auxiliary qubits 621 in the entire region. Next, Fig. 10 will be described.

In Fig. 10, each parallel processing device 22i determines the data qubit 611 to be judged as having a Z error in the multiple overlap regions 710 overall, based on the syndrome of each auxiliary qubit 621 after the update in the entire region. It is preferable that each parallel processing device 22i determines the data qubit 611 to be judged as having a Z error in the entirety of the multiple overlap regions 710 according to the same algorithm.

Each parallel processing device 22i identifies, for example, an overall overlap region obtained by combining multiple overlap regions 710. For example, in the overall overlap region, each parallel processing device 22i identifies a path from the auxiliary qubit 621 representing the Z error to the right end of the overall overlap region. For example, each parallel processing device 22i inverts whether each data qubit 611 present on the identified path in the overall overlap region is to be judged as having a Z error.

In the example depicted in Fig. 10, specifically, each parallel processing device 22i identifies a path 1010 toward the right end of the overall overlap region, from the auxiliary qubit 621 representing the Z error and present at the position 901. Specifically, each parallel processing device 22i inverts whether each data qubit 611 present on the identified path 1010 in the overall overlap region is to be judged as having a Z error. More specifically, each parallel processing device 22i determines the data qubits 611 present at positions 1001 to 1004 on the identified path 1010 as the data qubits 611 to be judged as having a Z error.

Specifically, each parallel processing device 22i identifies a path 1020 toward the right end of the overall overlap region, from the auxiliary qubit 621 representing the Z error and present at the position 902. Specifically, each parallel processing device 22i inverts whether each data qubit 611 present on the identified path 1020 in the overall overlap region is to be judged as having a Z error. More specifically, each parallel processing device 22i determines the data qubits 611 present at the positions 1002 to 1004 on the identified path 1010 as the data qubits 611 that are not to be judged as having a Z error. More specifically, each parallel processing device 22i determines each data qubit 611 present at the identified position 1005 on the path 1010 as the data qubit 611 to be judged as having a Z error.

As a result, each of the parallel processing devices 22i determines the data qubits 611 present at the position 1001 and the position 1005 as the data qubits 611 to be judged as having a Z error. Accordingly, each parallel processing device 22i can determine the data qubit 611 to be judged as having a Z error in the multiple overlap regions 710 overall.

In addition, since each parallel processing device 22i does not use the minimum weight perfect matching problem, the processing amount can be reduced. For example, each parallel processing device 22i may search for a pattern of the data qubits 611 to be judged as having a Z error in the multiple overlap regions 710 overall as the minimum weight perfect matching problem.

Here, while a case in which each parallel processing device 22i identifies the path toward the right end of the overall overlap region with the auxiliary qubit 621 representing the Z error as the starting point has been described, the present invention is not limited hereto. For example, each parallel processing device 22i may identify a path toward the left end of the overall overlap region, with the auxiliary qubit 621 representing the Z error as a starting point.

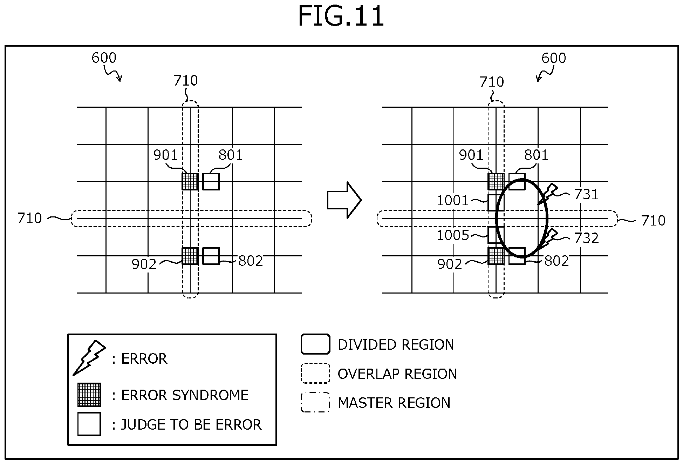

In addition, for example, each parallel processing device 22i may identify a path toward the right end of the overall overlap region and a path toward the left end with the auxiliary qubit 621 representing the Z error as a starting point. In this case, each of the parallel processing devices 22i selects the end where the number of data qubits 611 to be judged as having a Z error is smaller between the right end and the left end. Each of the parallel processing devices 22i inverts for each of the data qubits 611 present on the path toward the selected end, whether the data qubit 611 is to be judged as having a Z error, the path having as a starting point, the auxiliary qubit 621 representing the Z error. Next, Fig. 11 will be described.

In Fig. 11, each parallel processing device 22i determines the data qubits 611 present at the position 801, the position 802, the position 1001, and the position 1005 as the data qubits 611 to be judged as having a Z error. Here, as depicted in Fig. 7, the data qubits 611 present at the position 731 and the position 732 are the data qubits 611 in which the Z error has actually occurred.

Therefore, each parallel processing device 22i does not identify the data qubit 611 in which the Z error has actually occurred. However, according to the theory of surface coding, when the data qubit 611 in which the Z error actually occurs and the data qubit 611 to be judged as having a Z error by each parallel processing device 22i form a loop, there is a property that no inconvenience occurs. Therefore, each parallel processing device 22i can appropriately determine the data qubit 611 to be judged as having a Z error. For the theory of the surface code, specifically, the following Reference Document 8 can be referred to.

Reference Document 8: Fowler, Austin G., et al. "Surface codes: Towards practical large-scale quantum computation." Physical Review A 86.3 (2012): 032324.

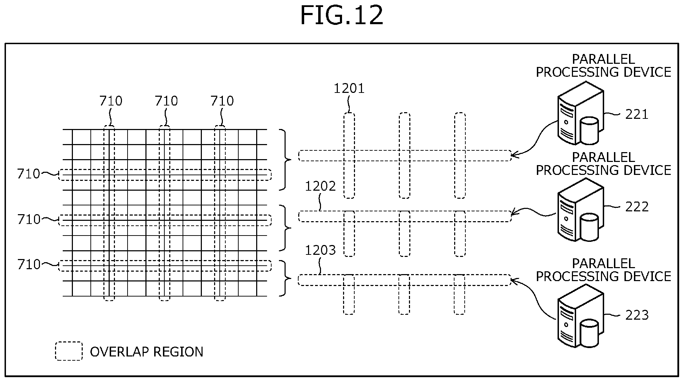

Next, another example in which the information processing system determines the data qubit 611 to be judged as having a Z error in the multiple overlap regions 710 overall will be described with reference to Fig. 12. Specifically, for example, an example in which the multiple parallel processing devices 22i execute, in parallel, the process of determining the data qubit 611 to be judged as having a Z error in the multiple overlap regions 710 overall will be described.

Fig. 12 is an explanatory diagram depicting another example of determining the data qubit 611 to be judged as having a Z error. In Fig. 12, the information processing device 100 divides the overall overlap region into three overlap partial regions 1200 each including one overlap region 710 in the horizontal direction. The information processing device 100 allocates the three divided overlapping partial regions 1200 to different parallel processing devices 220. In the following description, an i-th overlapping partial region may be referred to as an "overlapping partial region 120i" in a distinguishable manner.

Each parallel processing device 22i determines the data qubit 611 to be judged as having a Z error in the i-th overlap partial region 120i, similarly to Fig. 11. Each parallel processing device 22i distributes the result of determining the data qubit 611 to be judged as having a Z error in the i-th overlap partial region 120i to the other parallel processing devices 220. Each parallel processing device 22i integrates the results of determining the data qubits 611 to be judged as having a Z error in the respective overlap partial regions 1200, and determines the data qubits 611 to be judged as having a Z error in the overall overlap region.

Accordingly, the information processing system can reduce the processing load and the processing time necessary when determining the data qubit 611 to be judged as having a Z error in the multiple overlap regions 710 overall.

In addition, the quantum computing device 210 collects, from each parallel processing device 22i, information indicating the position of the data qubit 611 to be judged as having a Z error. Accordingly, the quantum computing device 210 can identify the position of the data qubit 611 to be judged as having a Z error in the logical qubit 600.

Here, the quantum computing device 210 may determine whether the number of data qubits 611 to be judged as having a Z error on each line segment of the two-dimensional lattice shape is at least equal to a threshold value. For each data qubit 611 present in a region on any line segment for which it is determined that the number of data qubits 611 to be judged as having a Z error is at least equal to the threshold, the quantum computing device 210 inverts whether the data qubit 611 is to be judged as having a Z error.

Accordingly, the quantum computing device 210 can easily correct the Z error. Here, while a case in which the quantum computing device 210 inverts whether each data qubit 611 is to be judged as having a Z error in a region on any line segment has been described, the present invention is not limited hereto. For example, there may be a case where for each of the data qubits on any of the line segments, any of the parallel processing devices 22i inverts whether the data qubit 611 is to be judged as having a Z error.

Here, while a case in which the information processing device 100 controls the multiple parallel processing devices 220 so as to determine the data qubit 611 to be judged as having a Z error has been described, the present invention is not limited hereto. For example, there may be a case where the information processing device 100 controls the multiple parallel processing devices 220 so as to determine the data qubit 611 that is to be judged as having an X error.

Here, while a case in which the width of the overlap region 710 corresponds to one qubit has been described, the present invention is not limited hereto. For example, the width of the overlap region 710 may be three qubits or more. For example, in the overall region, the information processing device 100 sets, as the overlap region 710, one or more regions in the vertical direction or the horizontal direction, the one or more regions not overlapping each other and each being in a corresponding range defined by one or more different line segments grouped together, encompassing the corresponding range. For example, the information processing device 100 identifies each of the rectangular regions divided by the overlap region 710 in the entire region as a master region 720. The information processing device 100 sets multiple divided regions 700, each including a different master region 720 and sharing the overlap region 710 among the divided regions 700.

### (Specific Example of Operation of Information Processing System)

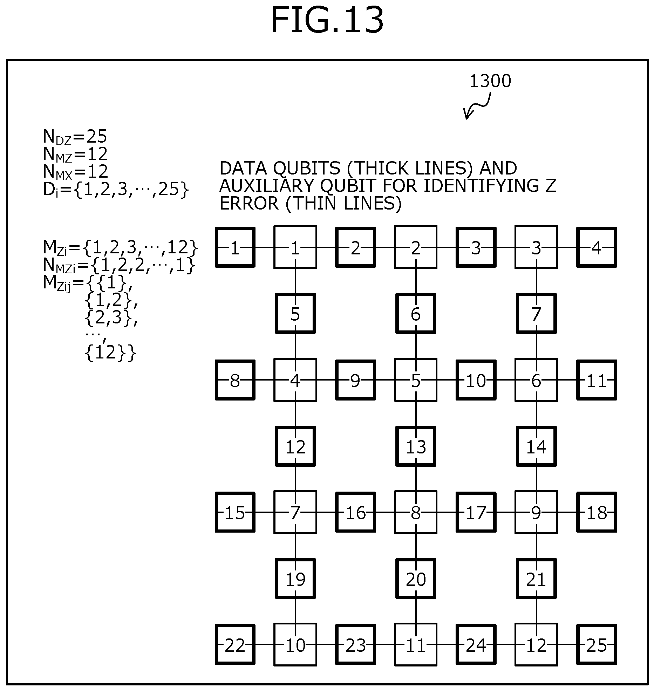

Next, a specific example of the operation of the information processing system will be described with reference to Figs. 13 to 20. In the examples depicted in Figs. 13 to 20, it is assumed that there are N parallel processing devices 220.

Figs. 13, 14, 15, 16, 17, 18, 19, and 20 are explanatory diagrams depicting specific examples of the operation of the information processing system. In Fig. 13, the information processing device 100 receives from the quantum operation apparatus 210, a number N_{DZ} of data qubits, a number N_{MZ} of auxiliary qubits for Z error identification, and a number N_{MX} of auxiliary qubits for X error identification in a logical qubit.

The information processing device 100 receives from the quantum operation apparatus 210, the index data Dᵢ (i=1, ..., N_{DZ}) of the data qubits in the logical qubit. The index data Dᵢ identifies, for example, the i-th data qubit.

The information processing device 100 receives from the quantum computing device 210, the index data M_{Zi} (i=1, ..., N_{MZ}) of the auxiliary qubit for identifying a Z error in the logical qubit. The index data M_{Zi} identifies, for example, an i-th auxiliary qubit for identifying a Z error.

The information processing device 100 receives from the quantum operation apparatus 210, the index data M_{Xi} (i=1, ..., N_{MX}) of the auxiliary qubit for identifying an X error in the logical qubit. The index data M_{Xi} identifies, for example, an i-th auxiliary qubit for identifying an X error.

The information processing device 100 identifies the number N_{MZi} of auxiliary qubits for Z error identification adjacent to the i-th (i=1, ..., N_{DZ}) data qubit in the logical qubits. The information processing device 100 identifies the index data M_{Zij} (j=1, ..., N_{MZi}) of the auxiliary qubit for identifying a Z error adjacent to the i-th (i=1, ..., N_{DZ}) data qubit in the logical qubit.

The information processing device 100 identifies the number N_{MXi} of auxiliary qubits for X error identification adjacent to the i-th (i=1, ..., N_{DZ}) data qubit in the logical qubits. The information processing device 100 identifies the index data M_{Xij} (j=1, ..., N_{MXi}) of the auxiliary qubit for identifying an X error adjacent to the i-th (i=1, ..., N_{DZ}) data qubit in the logical qubit.

In the example depicted in Fig. 13, the information processing device 100 obtains N_{DZ}=25, N_{MZ}=12, N_{MX}=12, and Dᵢ={1, 2, 3, ..., 25} for the logical qubits of the surface code with the code distance 4.

The information processing device 100 obtains M_{Zi}={1, 2, 3, ..., 12} for the logical qubits of the surface code with the code distance of 4. The information processing device 100 identifies N_{MZi}={1, 2, 2, ..., 1} and M_{Zij}={{1}, {1,2}, {2,3}, ..., {12}} for the logical qubits of the surface code of the code distance 4.

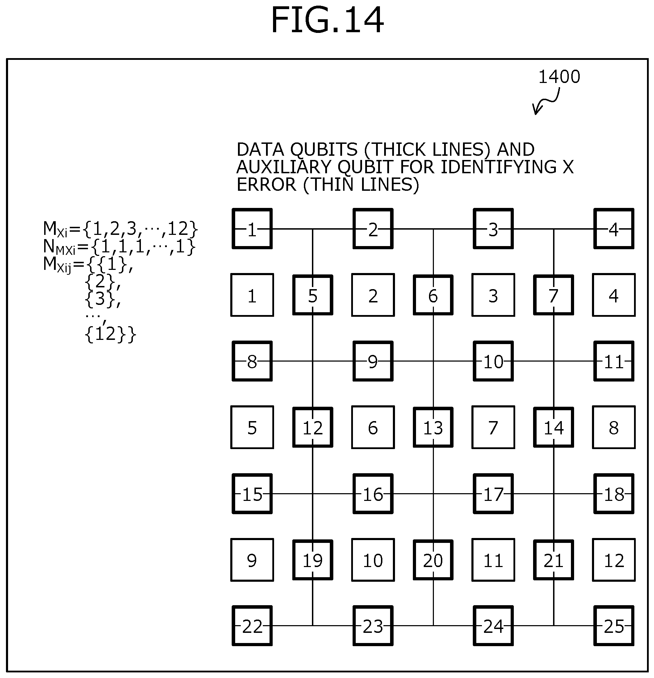

An arrangement 1300 of data qubits and auxiliary qubits for Z error identification is depicted in Fig. 13. In the arrangement 1300, data qubits are indicated by bold squares. In the arrangement 1300, the auxiliary qubits for Z error identification are indicated by thin squares. Next, Fig. 14 will be described.

In the example depicted in Fig. 14, the information processing device 100 obtains M_{Xi} ={1, 2, 3, ..., 12} for the logical qubits of the surface code of the code distance 4. The information processing device 100 identifies N_{MXi}={1, 1, 1, ..., 1} and M_{Xij}={{1}, {2}, {3}, ..., {12}} for the logical qubits of the surface code of the code distance 4.

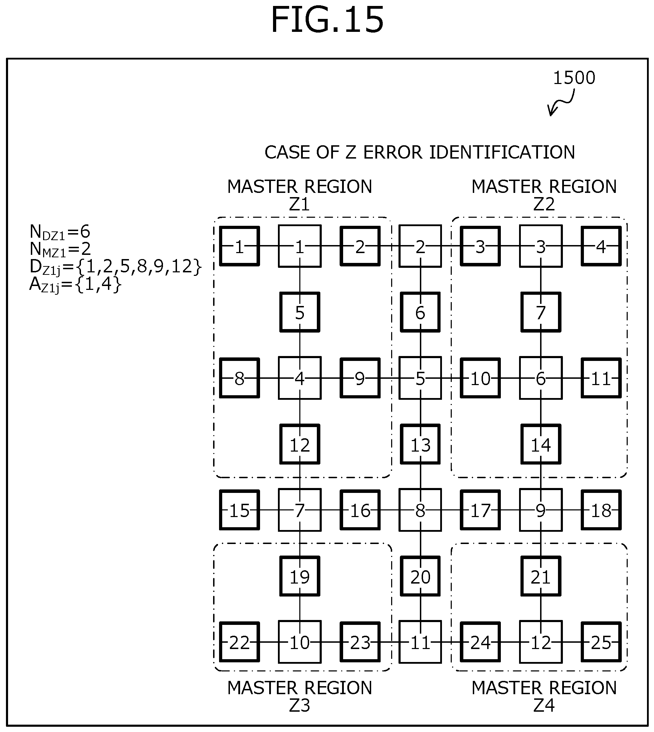

An arrangement 1400 of data qubits and auxiliary qubits for X error identification is depicted in Fig. 14. In the arrangement 1400, data qubits are indicated by bold squares. In the arrangement 1400, the auxiliary qubits for X error identification are indicated by thin squares. Next, Fig. 15 will be described.

In Fig. 15, the information processing device 100 identifies N master regions in an entire region 1500 of a logical qubit, for the Z error identification. In the example depicted in Fig. 15, the information processing device 100 identifies a master region Z1, a master region Z2, a master region Z3, and a master region Z4 in the entire region 1500 of the logical qubit, for the Z error identification.

Specifically, the information processing device 100 sets as the overlap region, the second region from the left and in which the data qubits and the auxiliary qubits for Z error identification are arranged in the vertical direction in the entire region 1500 of the logical qubits, based on the operation input of the user. Specifically, the information processing device 100 sets the third region from the top and in which the data qubits and the auxiliary qubits for identifying a Z error are arranged in the horizontal direction as the overlap region, based on the operation input of the user.

Specifically, the information processing device 100 identifies a master region Z1, a master region Z2, a master region Z3, and a master region Z4 divided by the set overlap region in the entire region 1500 of the logical qubit.

The information processing device 100 identifies the number N_{DZi} of data qubits and the number N_{MZi} of auxiliary qubits for Z error identification in the i-th (i=1, ..., N) master region for Z error identification. The information processing device 100 identifies the index data D_{Zij} (j=1, ..., N_{DZi}) of the data qubit in the i-th (i=1, ..., N) master region for Z error identification. The index data D_{Zij} is a value that enables data qubits to be uniquely identified in the entire region of logical qubits.

The information processing device 100 identifies the index data A_{Zij} (j=1, ..., N_{MZi}) of the auxiliary qubit for identifying a Z error in the i-th (i=1, ..., N) master region for identifying a Z error. The index data A_{Zij} is a value that makes it possible to uniquely identify the auxiliary qubit for identifying a Z error in the entire region of the logical qubit.

In the example depicted in Fig. 15, specifically, the information processing device 100 identifies N_{DZ1}=6 and N_{MZ1}=2. Specifically, the information processing device 100 identifies D_{Z1j} (j=1, ..., N_{DZi}) ={1,2, 5, 8, 9, 12} and A_{Z1j} (j=1, ..., N_{MZi}) ={1,4}.

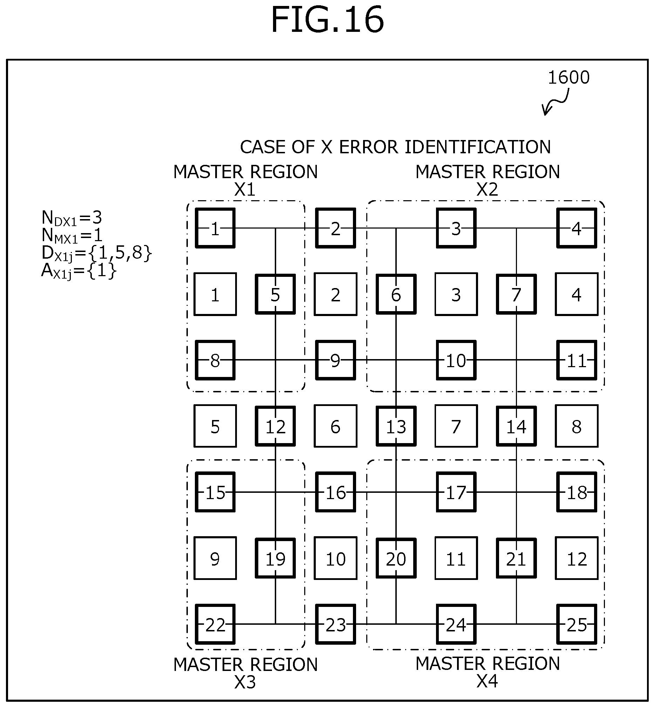

In Fig. 16, the information processing device 100 identifies N master regions in the entire region 1600 of the logical qubit, for the X error identification. In the example depicted in Fig. 16, the information processing device 100 identifies a master region X1, a master region X2, a master region X3, and a master region X4 in the entire region 1600 of the logical qubit, for the X error identification.

Specifically, the information processing device 100 sets, as the overlap region, the second region from the left and in which the data qubits and the auxiliary qubits are arranged in the vertical direction in the entire region 1600 of the logical qubit, based on the operation input of the user. Specifically, the information processing device 100 sets, as the overlap region, the second region from the top and in which the data qubits and the auxiliary qubits are arranged in the horizontal direction, based on the operation input of the user.

Specifically, the information processing device 100 identifies the master region X1, the master region X2, the master region X3, and the master region X4 divided by the set overlap region in the entire region 1600 of the logical qubit.

The information processing device 100 identifies the number N_{DXi} of data qubits and the number N_{MXi} of auxiliary qubits for X error identification in the i-th (i=1, ..., N) master region for X error identification. The information processing device 100 identifies the index data D_{Xij} (j=1, ..., N_{DXi}) of the data qubits in the i-th (i=1, ..., N) master region for X error identification. The index data D_{Xij} is a value that enables data qubits to be uniquely identified in the entire region of logical qubits.

The information processing device 100 identifies the index data A_{Xij} (j=1, ..., N_{MXi}) of the auxiliary qubit for X error identification in the i-th (i=1, ..., N) master region for X error identification. The index data A_{Xij} is a value that makes it possible to uniquely identify the auxiliary qubit for identifying an X error in the entire region of the logical qubit.

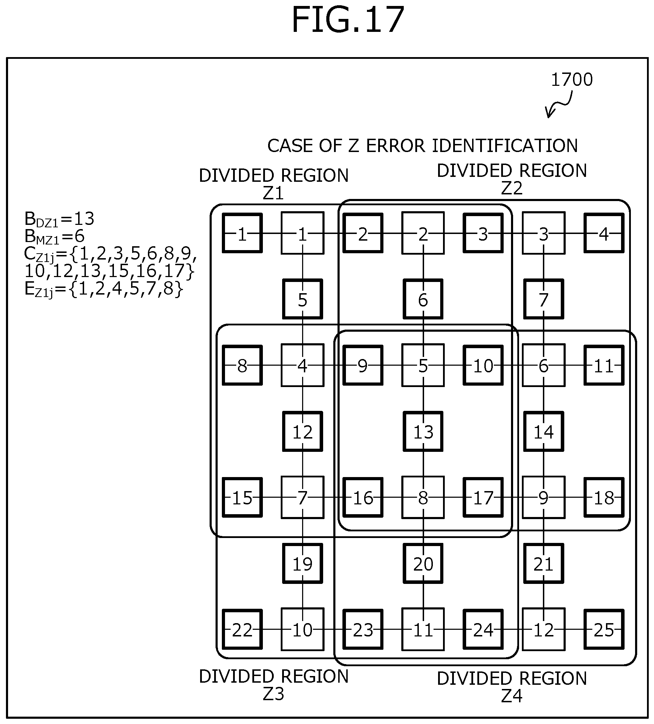

In the example depicted Fig. 16, specifically, the information processing device 100 identifies N_{DX1}=3 and N_{MX1}=1. Specifically, the information processing device 100 identifies D_{X1j} (j=1, ..., N_{DX1}) ={1,5, 8} and A_{X1j} (j=1, ..., N_{MXi}) ={1}. Next, Fig. 17 will be described.

In Fig. 17, the information processing device 100 divides an entire region 1700 of the logical qubit into N divided regions each including one master region, based on identified master regions, for the Z error identification. Each divided region includes in the overlap region, a shared region adjacent to the master region included in the divided region, the shared region being shared with another divided region.

In the example depicted in Fig. 17, the information processing device 100 divides the entire region 1700 of the logical qubit into a divided region Z1, a divided region Z2, a divided region Z3, and a divided region Z4, for the Z error identification. The divided region Z1 includes, for example, a master region Z1. The divided region Z2 includes, for example, a master region Z2. The divided region Z3 includes, for example, a master region Z4. The divided region Z4 includes, for example, a master region Z4.

The information processing device 100 identifies the number B_{DZi} of data qubits and the number B_{MZi} of auxiliary qubits for Z error identification in the i-th (i=1, ..., N) divided region for Z error identification. The information processing device 100 identifies the index data C_{Zij} (j=1, ..., B_{DZi}) of the data qubits in the i-th (i=1, ..., N) divided region for Z error identification. The index data C_{Zij} is a value that enables data qubits to be uniquely identified in the entire region of logical qubits.

The information processing device 100 identifies the index data E_{Zij} (j=1, ..., B_{MZi}) of the auxiliary qubit for Z error identification in the i-th (i=1, ..., N) divided region for Z error identification. The index data E_{Zij} is a value that makes it possible to uniquely identify the auxiliary qubit for identifying an Z error in the entire region of the logical qubit.

In the example depicted Fig. 17, specifically, the information processing device 100 identifies B_{DZ1}=13 and B_{MZ1}=6. Specifically, the information processing device 100 identifies C_{Z1j}(j=1, ..., B_{DZi}) ={1, 2, 3, 5, 6, 8, 9, 10, 12, 13, 15, 16, 17} and E_{Z1j}(j=1, ..., B_{MZi}) ={1, 2, 4, 5, 7, 8}.

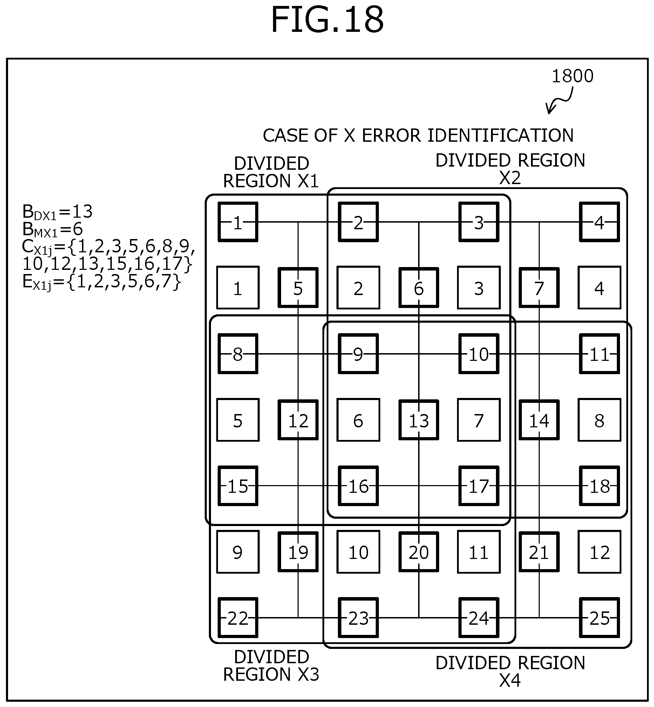

In Fig. 18, the information processing device 100 divides an entire region 1800 of a logical qubit into N divided regions each including one master region, based on identified master regions for the X error identification. The divided region includes in the overlap region, a shared region adjacent to the master region included in the divided region, the shared region being shared with another divided region.

In the example depicted in Fig. 18, the information processing device 100 divides the entire region 1800 of the logical qubit into a divided region X1, a divided region X2, a divided region X3, and a divided region X4 for the X error identification. The divided region X1 includes, for example, a master region X1. The divided region X2 includes, for example, a master region X2. The divided region X3 includes, for example, a master region X4. The divided region X4 includes, for example, a master region X4.

The information processing device 100 identifies the number B_{DXi} of data qubits and the number B_{MXi} of auxiliary qubits for X error identification in the i-th (i=1, ..., N) divided region for X error identification. The information processing device 100 identifies the index data C_{Xij} (j=1, ..., B_{DXi}) of the data qubits in the i-th (i=1, ..., N) divided region for X error identification. The index data C_{Xij} is a value that makes it possible to uniquely identify a data qubit in the entire region of the logical qubit.

The information processing device 100 identifies the index data E_{Xij} (j=1, ..., B_{MXi}) of the auxiliary qubit for X error identification in the i-th (i=1, ..., N) divided region for X error identification. The index data E_{Xij} is a value that makes it possible to uniquely identify the auxiliary qubit for identifying an X error in the entire region of the logical qubit.

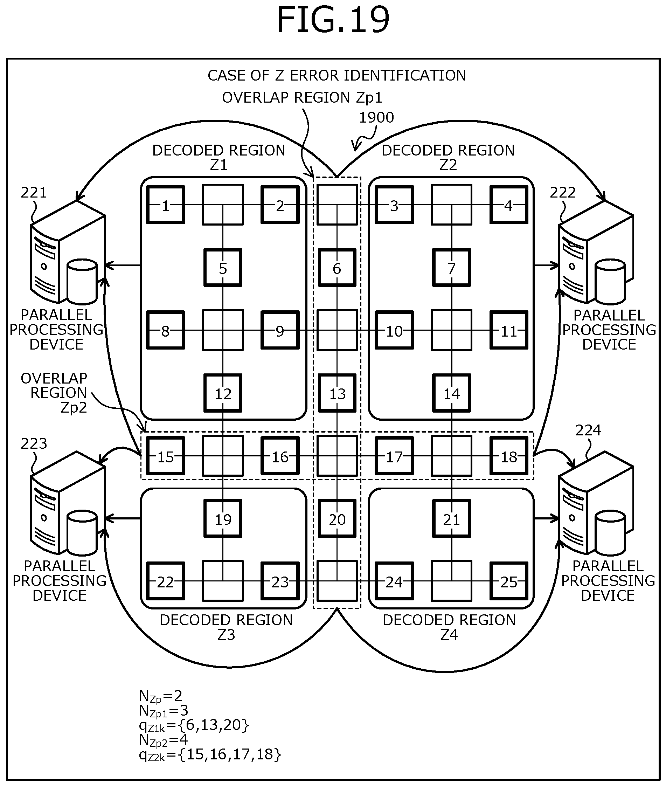

In the example depicted in Fig. 18, specifically, the information processing device 100 identifies B_{DX1}=13 and B_{MX1}=6. Specifically, the information processing device 100 identifies C_{X1j} (j=1, ..., B_{DXi}) ={1, 2, 3, 5, 6, 8, 9, 10, 12, 13, 15, 16, 17} and E_{X1j} (j=1, ..., B_{MXi}) ={1, 2, 3, 5, 6, 7}. Next, Fig. 19 will be described.

In Fig. 19, the information processing device 100 identifies information indicating an overlap region that divides a divided region, which is set for Z error identification. The width of the overlap region corresponds to one data qubit. The overlap region is, for example, a linear region including a data qubit and an auxiliary qubit for identifying a Z error. In the example depicted in Fig. 19, specifically, it is assumed that the information processing device 100 has already set the overlap region Zp1 and the overlap region Zp2.

The information processing device 100 identifies the number N_{Zp} of overlap regions for Z error identification and the number N_{Zpk} (k=1, ..., N_{Zp}) of data qubits included in a k-th overlap region. The information processing device 100 identifies the index data q_{Zkl} (I=1, ..., N_{Zpk}) of the data qubits included in the k-th overlap region.

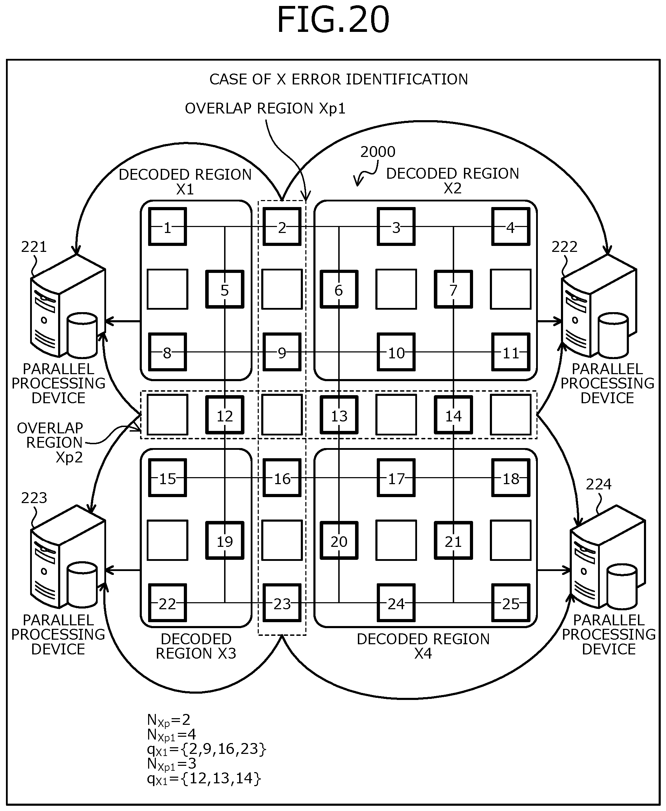

In the example depicted in Fig. 19, the information processing device 100 identifies N_{Zp}=2, N_{Zp1}=3, q_{Z1l}={6, 13, 20}, N_{Zp2}=4, and q_{Z2l}={15, 16, 17, 18}. The information processing device 100 allocates the i-th divided region Zi for Z error identification to the i-th parallel processing device 22i. The information processing device 100 allocates the overlap region Zp1 and the overlap region Zp2 to the parallel processing devices 220. Next, Fig. 20 will be described.

In Fig. 20, the information processing device 100 identifies information indicating an overlap region that divides a divided region and is set for X error identification. The width of the overlap region corresponds to one data qubit. The overlap region is, for example, a linear region including a data qubit and an auxiliary qubit for identifying an X error. In the example depicted in Fig. 20, specifically, it is assumed that the information processing device 100 has already set the overlap region Xp1 and the overlap region Xp2.

The information processing device 100 identifies the number N_{Xp} of overlap regions for X error identification and the number N_{Xpk} (k=1, ..., N_{Xp}) of data qubits included in the k-th overlap region. The information processing device 100 identifies the index data q_{Xkl} (I=1, ..., N_{Xpk}) of the data qubits included in the k-th overlap region.

In the example depicted in Fig. 20, the information processing device 100 identifies N_{Xp}=2, N_{Xp1}=4, q_{X1l}={2,9, 16,23}, N_{Xp2}=3, and q_{X2l}={12,13,14}. The information processing device 100 allocates the i-th divided region Xi for X error identification to the i-th parallel processing device 22i. The information processing device 100 allocates the overlap region Xp1 and the overlap region Xp2 to the parallel processing devices 220.

The information processing device 100 transmits various data to the parallel processing device 22i (i=1, ..., N). The various data include N_{DZi}, N_{MZi}, N_{DXi}, N_{MXi}, D_{Zij}, A_{Zij}, D_{Xij}, and A_{Xij}. The various data include B_{DZi}, B_{MZi}, B_{DXi}, B_{MXi}, C_{Zij}, E_{Zij}, C_{Xij}, and E_{Xij}. The various data include N_{Zp}, N_{Zpk}, G_{Zkl}, G_{Zpk}, s_{Zkl}, N_{Xp}, N_{Xpk}, G_{Xkl}, G_{Xpk}, and s_{Xkl}.

Accordingly, the information processing device 100 can notify the parallel processing device 22i of the i-th divided region Zi for Z error identification and the i-th master region Zi for Z error identification allocated to the parallel processing device 22i. The information processing device 100 can notify the parallel processing device 22i of the overlap region Zp1 and the overlap region Zp2 allocated to the parallel processing device 22i.

The information processing device 100 can notify the parallel processing device 22i of the i-th divided region Xi for X error identification and the i-th master region Xi for X error identification allocated to the parallel processing device 22i. The information processing device 100 can notify the parallel processing device 22i of the overlap region Xp1 and the overlap region Xp2 allocated to the parallel processing device 22i.

Similarly to Figs. 6 to 12, each parallel processing device 22i determines a data qubit to be judged as having a Z error. Specifically, each parallel processing device 22i determines in each divided region for Z error identification, a data qubit that is to be judged as having a Z error. Specifically, each parallel processing device 22i updates the syndrome of the auxiliary qubit for identifying a Z error in cooperation with the other parallel processing devices 220, based on the determined data qubit that is to be judged as having a Z error. Specifically, each parallel processing device 22i determines the data qubit that is to be judged as having a Z error in the overlap region for identifying a Z error, based on the syndrome of the auxiliary qubit for identifying a Z error after the update.

Similarly to Figs. 6 to 12, each parallel processing device 22i determines a data qubit to be judged as having a X error. Specifically, each parallel processing device 22i determines a data qubit that is to be judged as having a X error in each divided region for X error identification. Specifically, each parallel processing device 22i updates the syndrome of the auxiliary qubit for identifying a X error in cooperation with the other parallel processing devices 220 based on the determined data qubit judged as having a X error. Specifically, each parallel processing device 22i determines the data qubit judged as having a X error in the overlap region for identifying a X error based on the syndrome of the auxiliary qubit for identifying a X error after the update.

As a result, the parallel processing devices 22i can execute in parallel, the process of determining the data qubit that is to be judged as having a Z error. Each parallel processing device 22i can reduce the processing load and the processing time necessary when determining the data qubit that is to be judged as having a Z error. Each parallel processing device 22i can accurately determine the data qubit that is to be judged as having a Z error.

In addition, the parallel processing devices 22i can execute in parallel, processing of determining a data qubit that is to be determined as having an X error. Each parallel processing device 22i can reduce the processing load and the processing time necessary when determining the data qubit that is to be judged as having an X error. Each parallel processing device 22i can accurately determine the data qubit that is to be judged as having an X error.

Here, while a case in which the information processing device 100 allocates N divided regions to N parallel processing devices 220 has been described, the present invention is not limited hereto. For example, the information processing device 100 may allocate N divided regions to one computer having N CPUs. For example, the information processing device 100 may allocate N divided regions to n parallel processing devices 220 having m CPUs so that N=m×n.

### (Example of Effects of Information Processing System)

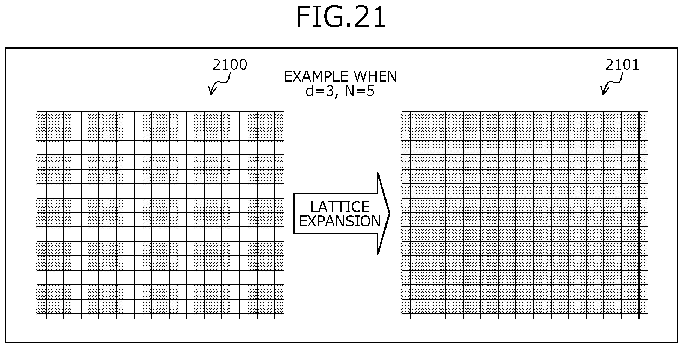

Next, an example of an effect of the information processing system will be described with reference to Figs. 21 to 26.

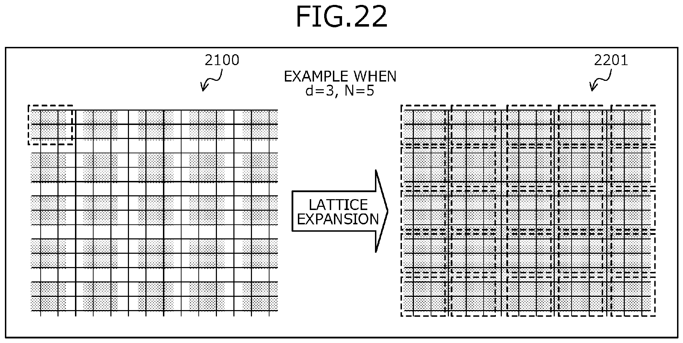

Figs. 21, 22, 23, 24, 25, and 26 are explanatory diagrams depicting examples of effects of the information processing system. As indicated by reference numeral 2100 in Fig. 21, it is assumed that logical qubits having a code distance d are arranged on a two-dimensional plane of N×N. In the example depicted in Fig. 21, d=3. In the example depicted in Fig. 21, N=5. Here, as indicated by reference numeral 2101 in Fig. 21, multiple logical qubits may be coupled, and lattice expansion may occur during an operation between logical qubits. Next, a case where the information processing device 100 is applied to multiple lattice-expanded logical qubits will be described with reference to Fig. 22.

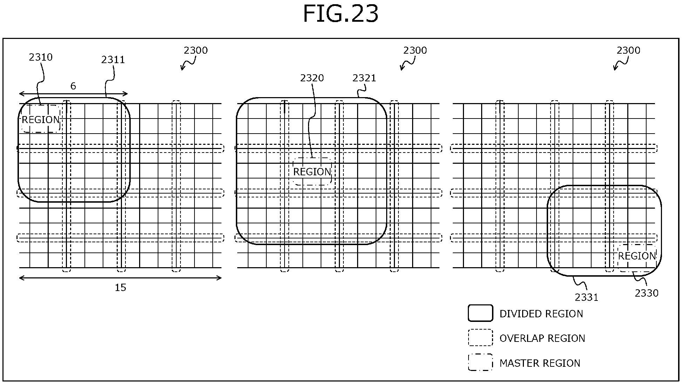

As indicated by reference numeral 2201 in Fig. 22, it is assumed that the information processing device 100 divides the entire region of multiple lattice-expanded logical qubits into 25 divided regions and allocates the 25 divided regions to 25 parallel processing devices 220. It is assumed that the information processing device 100 calculates the logical error probability by allocating the 25 divided regions to the 25 parallel processing devices 220. Here, it is assumed that the logical error probability calculated by the information processing device 100 is compared with the logical error probability of one logical qubit before lattice expansion. The decoding method is assumed to be solution of a minimum weight perfect matching problem. The noise model is assumed to be a code capacity. It is assumed that the number of syndrome measurements is d (≠ code distance of the entire region). Next, Fig. 23 will be described.

Fig. 23 depicts an example of the width of the divided region. As depicted in Fig. 23, the divided region may include an inclusive region that is larger than the master region by d. For example, the information processing device 100 may identify a divided region 2311 including a master region 2310 in an entire area 2300. For example, the information processing device 100 may identify a divided region 2321 including a master region 2320 in the entire area 2300. For example, the information processing device 100 may identify a divided region 2331 including a master region 2330 in the entire area 2300.

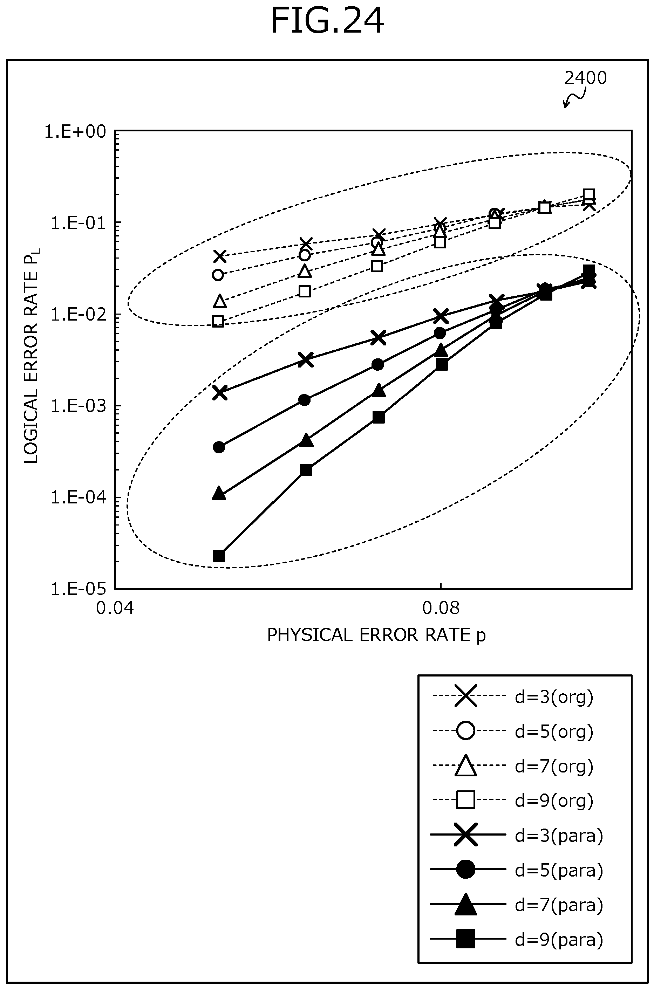

Accordingly, when determining, in the entire region, the data qubit that is to be judged as having as an error, the information processing device 100 can easily and accurately determine in the overlap region, the data qubit that is to be determined as having an error. Next, Fig. 24 will be described.

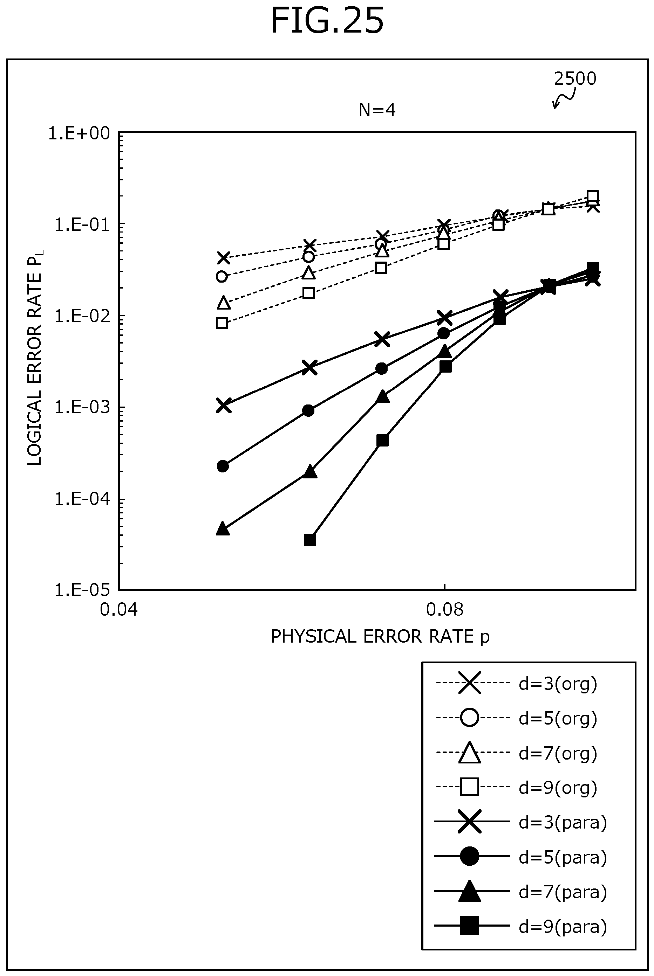

Fig. 24 depicts a graph 2400 comparing the logical error probability calculated by the information processing device 100 and the logical error probability of one logical qubit before lattice expansion with respect to N=3. As depicted in the graph 2400, there is a property that the logical error probability does not deteriorate before or after the lattice expansion for all values of d in all ranges of a physical error probability p. Accordingly, the information processing device 100 can cope with the lattice expansion without deteriorating the logical error probability. Next, Fig. 25 will be described.

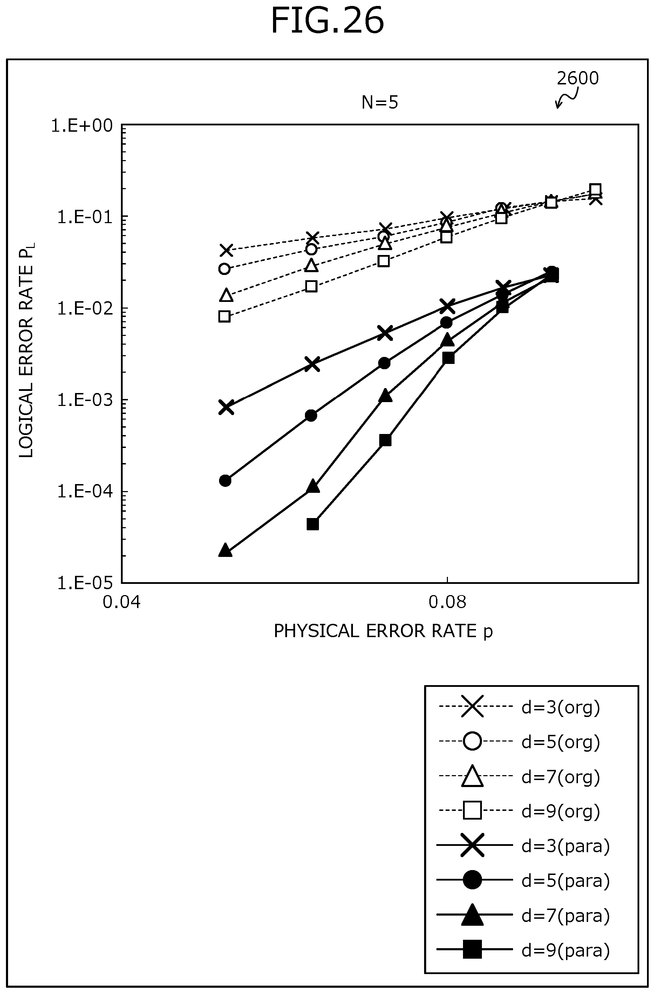

Fig. 25 depicts a graph 2500 comparing the logical error probability calculated by the information processing device 100 and the logical error probability of one logical qubit before lattice expansion with respect to N=4. As depicted in the graph 2500, there is a property that the logical error probability does not deteriorate before and after the lattice expansion for all values of d in all ranges of the physical error probability p. Accordingly, the information processing device 100 can cope with the lattice expansion without deteriorating the logical error probability. Next, Fig. 26 will be described.

Fig. 26 depicts a graph 2600 comparing the logical error probability calculated by the information processing device 100 and the logical error probability of one logical qubit before lattice expansion with respect to N=5. As depicted in the graph 2600, there is a property that the logical error probability does not deteriorate before and after the lattice expansion for all values of d in all ranges of the physical error probability p. Accordingly, the information processing device 100 can cope with the lattice expansion without deteriorating the logical error probability.

Here, the information processing device 100 can control the multiple parallel processing devices 220 so that the multiple parallel processing devices 220 share the multiple divided regions obtained by dividing the entire regions of the multiple logical qubits subjected to lattice expansion. Therefore, even when lattice expansion occurs, the information processing device 100 can accurately determine a data qubit that is to be judged as having an error, and can reduce the processing time necessary to determine a data qubit that is to be judged as having an error.

### (Procedure of First Preparation Process)

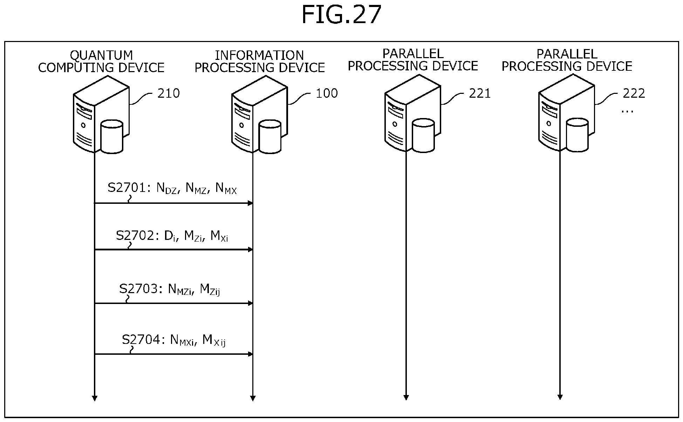

Next, an example of a procedure of a first preparation process executed by the information processing system will be described with reference to Fig. 27. The first preparation process is implemented by, for example, the CPU 301, the storage area such as the memory 302 or the recording medium 305, and the network I/F 303 depicted in Fig. 3.

Fig. 27 is a flowchart depicting an example of a procedure of the first preparation process. In Fig. 27, the quantum computing device 210 transmits N_{DZ}, N_{MZ}, and N_{MX} in logical qubits to the information processing device 100 (step S2701). N_{DZ} is the number of data qubits. N_{MZ} is the number of auxiliary qubits for Z error identification. N_{MX} is the number of auxiliary qubits for X error identification.

The quantum computing device 210 transmits Dᵢ (i=1, ..., N_{DZ}), M_{Zi} (i=1, ..., N_{MZ}), and M_{Xi} (i=1, ..., N_{MX}) in the logical qubits to the information processing device 100 (step S2702). Dᵢ (i=1, ..., N_{DZ}) is index data of the data qubit. M_{Zi} (i=1, ..., N_{MZ}) is index data of an auxiliary qubit for identifying a Z error. M_{Xi} (i=1, ..., N_{MX}) is index data of an auxiliary qubit for identifying an X error.

The quantum computing device 210 transmits N_{MZi} and M_{Zij} (j=1, ..., N_{MZi}) to the information processing device 100 (step S2703). N_{MZi} is the number of auxiliary qubits for identifying a Z error adjacent to the i-th (i=1, ..., N_{DZ}) data qubit. M_{Zij} (j=1, ..., N_{MZi}) is index data of auxiliary qubits for identifying a Z error and adjacent to the i-th (i=1, ..., N_{DZ}) data qubit.

The quantum computing device 210 transmits N_{MXi} and M_{Xij} (j=1, ..., N_{MXi}) to the information processing device 100 (step S2704). N_{MXi} is the number of auxiliary qubits for identifying an X error adjacent to the i-th (i=1, ..., N_{DZ}) data qubit. M_{Xij} (j=1, ..., N_{MXi}) is index data of X error specifying auxiliary qubits and adjacent to the i-th (i=1, ..., N_{DZ}) data qubit. The information processing system ends the first preparation process.

### (Procedure of Second Preparation Process)

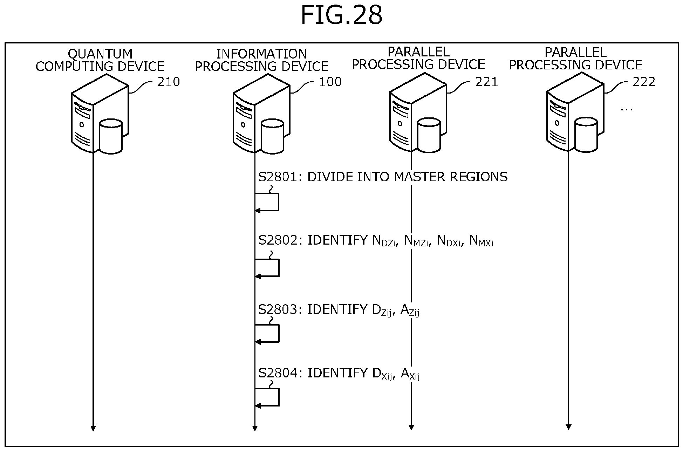

Next, an example of a procedure of a second preparation process executed by the information processing system will be described with reference to Fig. 28. The second preparation process is implemented by, for example, the CPU 301, the storage area such as the memory 302 or the recording medium 305, and the network I/F 303 depicted in Fig. 3.

Fig. 28 is a flowchart depicting an example of a procedure of the second preparation process. In Fig. 28, the information processing device 100 divides lattice data of the logical qubits into N master regions for Z error identification and divides the lattice data of the logical qubits into N master regions for X error identification (step S2801).

The information processing device 100 identifies N_{DZi} and N_{MZi}, and N_{DXi} and N_{MXi} (step S2802). N_{DZi} is the number of data qubits of the i-th (i=1, ..., N) master region for Z error identification. N_{MZi} is the number of auxiliary qubits of the i-th (i=1, ..., N) master region for identifying a Z error. N_{DXi} is the number of data qubits of the i-th (i=1, ..., N) master region for X error identification. N_{MXi} is the number of auxiliary qubits of the i-th (i=1, ..., N) master region for identifying an X error.

The information processing device 100 identifies D_{Zij} (j=1, ..., N_{DZi}) and A_{Zij} (j=1, ..., N_{MZi}) (step S2803). D_{Zij} (j=1, ..., N_{DZi}) is index data of the data qubits of the i-th (i=1, ..., N) master region for identifying a Z error. A_{Zij} (j=1, ..., N_{MZi}) is index data of the auxiliary qubits of the i-th (i=1, ..., N) master region for identifying a Z error.

The information processing device 100 identifies D_{Xij} (j=1, ..., N_{XZi}) and A_{Xij} (j=1, ..., N_{MXi}) (step S2804). D_{Xij} (j=1, ..., N_{DXi}) is index data of the data qubits of the i-th (i=1, ..., N) master region for X error identification. A_{Xij} (j=1, ..., N_{MXi}) is index data of the auxiliary qubits of the i-th (i=1, ..., N) master region for identifying an X error. The information processing system ends the second preparation process.

### (Procedure of Third Preparation Process)

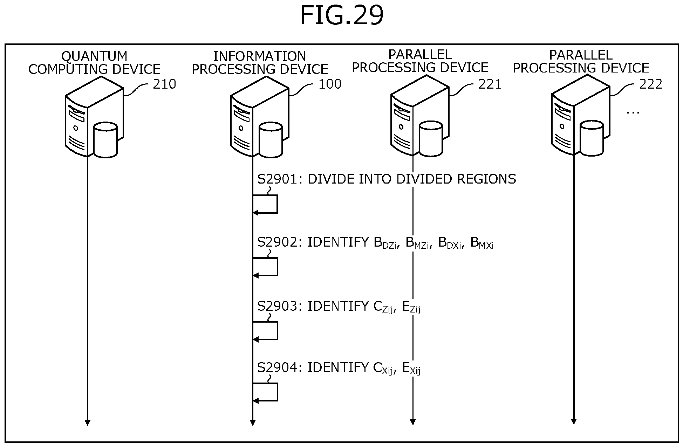

Next, an example of a procedure of a third preparation process executed by the information processing system will be described with reference to Fig. 29. The third preparation process is implemented by, for example, the CPU 301, the storage area such as the memory 302 or the recording medium 305, and the network I/F 303 depicted in Fig. 3.

Fig. 29 is a flowchart depicting an example of a procedure of the third preparation process. In Fig. 29, the information processing device 100 divides the lattice data of the logical qubits into N divided regions for Z error identification and divides the lattice data of logical qubits into N divided regions for X error identification (step S2901).

The information processing device 100 identifies B_{DZi} and B_{MZi} and B_{DXi} and B_{MXi} (step S2902). B_{DZi} is the number of data qubits of the i-th (i=1, ..., N) divided region for identifying a Z error. B_{MZi} is the number of auxiliary qubits of the i-th (i=1, ..., N) divided region for identifying a Z error. B_{DXi} is the number of data qubits of the i-th (i=1, ..., N) divided region for X error identification. B_{MXi} is the number of auxiliary qubits of the i-th (i=1, ..., N) divided region for identifying an X error.

The information processing device 100 identifies C_{Zij} (j=1, ..., B_{DZi}) and E_{Zij} (j=1, ..., B_{MZi}) (step S2903). C_{Zij} (j=1, ..., B_{DZi}) is index data of the data qubits of the i-th (i=1, ..., N) divided region for identifying a Z error. E_{Zij} (j=1, ..., B_{MZi}) is index data of the auxiliary qubits of the i-th (i=1, ..., N) divided region for identifying a Z error.

The information processing device 100 identifies C_{Xij} (j=1, ..., B_{XZi}) and E_{Xij} (j=1, ..., B_{MXi}) (step S2904). C_{Xij} (j=1, ..., B_{DXi}) is index data of the data qubits of the i-th (i=1, ..., N) division region for identifying an X error. E_{Xij} (j=1, ..., B_{MXi}) is index data of the auxiliary qubits of the i-th (i=1, ..., N) divided region for identifying an X error. The information processing system ends the third preparation process.

### (Procedure of Fourth Preparation Process)

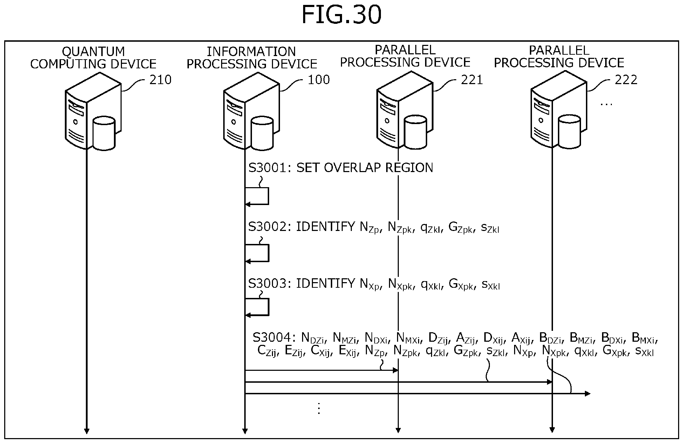

Next, an example of a procedure of a fourth preparation process executed by the information processing system will be described with reference to Fig. 30. The fourth preparation process is implemented by, for example, the CPU 301, the storage area such as the memory 302 or the recording medium 305, and the network I/F 303 depicted in Fig. 3.

Fig. 30 is a flowchart depicting an example of a procedure of the fourth preparation process. In Fig. 30, the information processing device 100 sets an overlap region between divided regions for Z error identification and an overlap region between divided regions for X error identification (step S3001).

The information processing device 100 identifies N_{Zp}, N_{Zpk} (k=1, ..., N_{Zp}), q_{Zkl} (l=1, ..., N_{Zpk}), G_{Zpk} (k=1, ..., N_{Zp}), and s_{Zkl} (l=1, ..., G_{Zpk}) (step S3002). N_{Zp} is the number of overlap regions for Z error identification. N_{Zpk} (k=1, ..., N_{Zp}) is the number of data qubits included in the k-th overlap region for Z error identification. q_{Zkl} (l=1, ..., N_{Zpk}) is index data of the data qubits included in the k-th overlap region for Z error identification. G_{Zpk} (k=1, ..., _{NZp}) is the number of auxiliary qubits included in the k-th overlap region for Z error identification. s_{Zkl} (l=1, ..., G_{Zpk}) is index data of the auxiliary qubits included in the k-th overlap region for Z error identification.

The information processing device 100 identifies N_{Xp}, N_{Xpk} (k=1, ..., N_{Xp}), q_{Xkl} (l=1, ..., N_{Xpk}), G_{Xpk} (k=1, ..., N_{Xp}), and s_{Xkl} (l=1, ..., G_{Xpk}) (step S3002). N_{Xp} is the number of overlap regions for X error identification. N_{Xpk} (k=1, ..., N_{Xp}) is the number of data qubits included in the k-th overlap region for X error identification. q_{Xkl} (l=1, ..., N_{Xpk}) is index data of the data qubits included in the k-th overlap region for X error identification. G_{Xpk} (k=1, ..., _{NXp}) is the number of auxiliary qubits included in the k-th overlap region for X error identification. s_{Xkl} (l=1, ..., G_{Xpk}) is index data of the auxiliary qubits included in the k-th overlap region for X error identification.

The information processing device 100 transmits various data to the parallel processing device 22i (step S3004). The various data include N_{DZi}, N_{MZi}, N_{DXi}, N_{MXi}, D_{Zij}, A_{Zij}, D_{Xij}, and A_{Xij}. The various data include B_{DZi}, B_{MZi}, B_{DXi}, B_{MXi}, C_{Zij}, E_{Zij}, C_{Xij}, and E_{Xij}. The various data include N_{Zp}, N_{Zpk}, q_{Zkl}, G_{Zpk}, s_{Zkl}, N_{Xp}, N_{Xpk}, q_{Xkl}, G_{Xpk}, and s_{Xkl}. The information processing system ends the fourth preparation process.

### (Procedure of Overall Process)

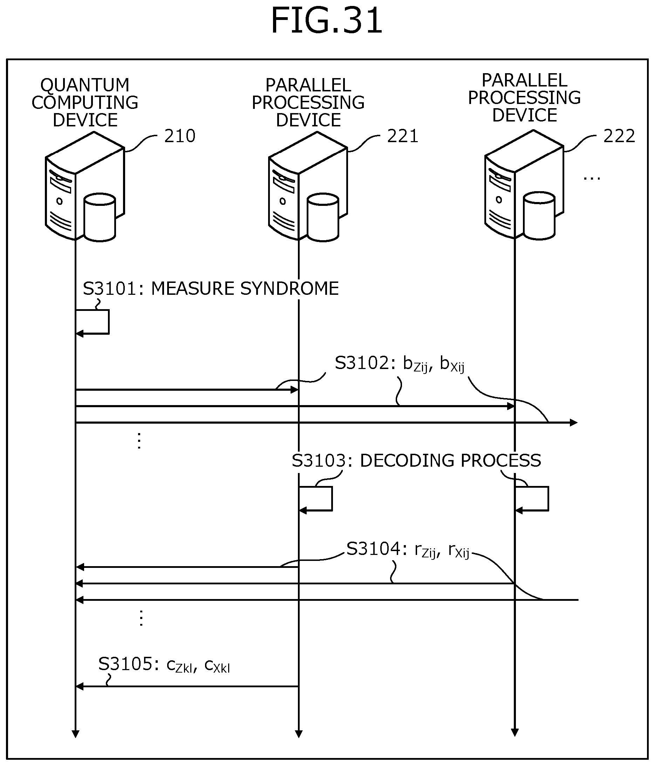

Next, an example of a procedure of an overall process executed by the information processing system will be described with reference to Fig. 31. The overall process is implemented by, for example, the CPU 301, storage areas such as the memory 302 and the recording medium 305, and the network I/F 303 depicted in Fig. 3.

Fig. 31 is a flowchart depicting an example of a procedure of the overall process. In Fig. 31, the quantum computing device 210 measures the syndromes of auxiliary qubits for identifying a Z error and the syndromes of auxiliary qubits for identifying an X error (step S3101).

The quantum computing device 210 transmits b_{Zij}={0,1} (j=1, ..., N_{MZi}) and b_{Xij}={0,1} (j=1, ..., N_{MXi}) to the parallel processing device 22i (i=1, ..., N) (step S3102). b_{Zi}j={0,1} (j=1, ..., N_{MZi}) is syndrome data of auxiliary qubits for identifying a Z error. b_{Xij}={0,1} (j=1, ..., N_{MXi}) is syndrome data of auxiliary qubits for identifying an X error.

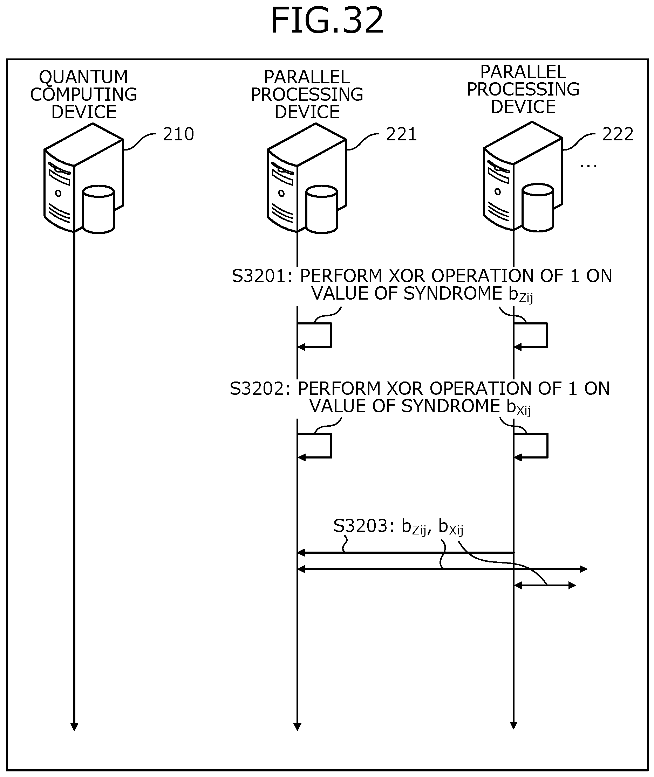

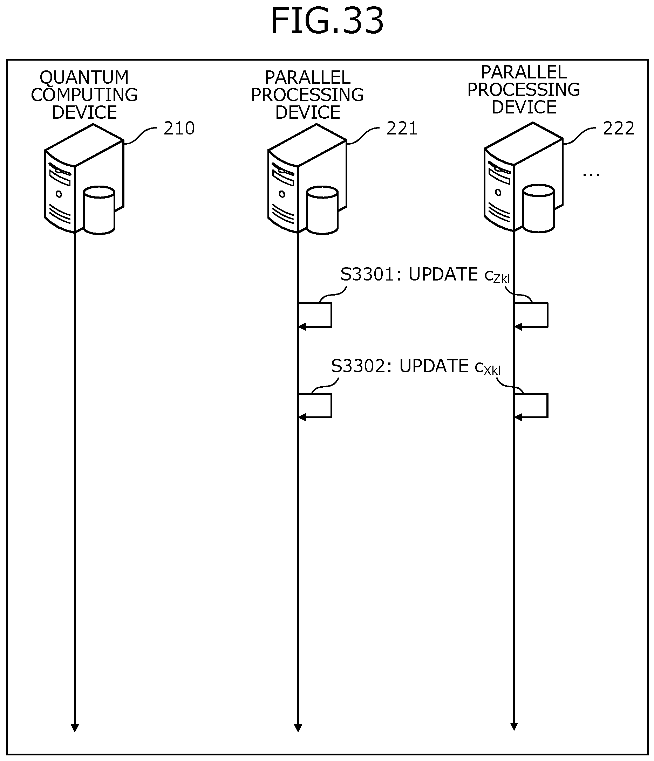

The N parallel processing devices 220 execute a decoding process described later with reference to Figs. 32 and 33 (step S3103). Each parallel processing device 22i transmits the Z error location data r_{Zi}j={0,1} (j=1, ..., N_{DZi}) and the X error location data r_{Xij}={0,1} (j=1, ..., N_{DXi}) to the quantum computing device 210 (step S3104).

A parallel processing device 221 transmits the Z error location data c_{Zkl} of the overlap region for identifying a Z error and the X error location data c_{Xkl} of the overlap region for identifying an X error to the quantum computing device 210 (step S3105).

The quantum computing device 210 may combine r_{Zij} and c_{Zkl} by an XOR operation and thereby generate Z error location data with respect to the entire logical qubit. The quantum computing device 210 may combine r_{Xij} and c_{Xkl} by an XOR operation and thereby generate X error location data with respect to the entire logical qubit. The information processing system ends the entire process. Accordingly, the N parallel processing devices 220 can accurately determine the data qubit in which the Z error has occurred and the data qubit in which the X error has occurred.

### (Procedure of Decoding Process)

Next, an example of a procedure of the decoding process executed by the information processing system will be described with reference to Figs. 32 and 33. The decoding process is implemented by, for example, the CPU 301, the storage area such as the memory 302 or the recording medium 305, and the network I/F 303 depicted in Fig. 3.

Figs. 32 and 33 are flowcharts depicting an example of the procedure of the decoding process. In Fig. 32, the parallel processing device 22i performs decoding on the divided region, based on the syndrome b_{Zij} of the auxiliary qubit. By decoding, the parallel processing device 22i updates r_{Zij} related to the master region D_{Zij} and the overlap region q_{Zkl} having the same index as C_{Zij} (j=1, ..., B_{DZi}) of the data qubit that judged as having a Z error. r_{Zij} is a flag representing a data qubit judged as having a Z error in the i-th (i=1, ..., N) divided region. Based on r_{Zij}, the parallel processing device 22i performs an XOR operation of 1 on the value of the syndrome b_{Zij} of the auxiliary qubit adjacent to the data qubit judged as having a Z error, among the data qubits overlapping or adjacent to the overlap region q_{Zkl} (step S3201).

The parallel processing device 22i performs decoding on the i-th (i=1, ..., N) divided region, based on the syndrome b_{Xij} of the auxiliary qubit. By decoding, the parallel processing device 22i updates r_{Xij} related to the master region D_{Xij} and the overlap region q_{Xkl} having the same index as C_{Xij} (j=1, ..., B_{DXi}) of the data qubit judged as having an X error. r_{Xij} is a flag representing a data qubit determined as an X error in the i-th (i=1, ..., N) divided region. The parallel processing device 22i performs an XOR operation of 1 on the value of the syndrome b_{Xij} of the auxiliary qubit adjacent to the data qubit judged as having an X error, among the data qubits overlapping or adjacent to the overlap region q_{Xkl} based on r_{Xij} (step S3202).

The parallel processing device 22i distributes b_{Zij} and b_{Xij} to the other parallel processing devices 220, and by an OR operation, updates and stores b_{Zij} and b_{Xij} related to each of i=1, ..., N (step S3203). Next, Fig. 33 will be described.

In Fig. 33, the parallel processing device 22i updates c_{Zkl}={0,1} (k=1, ..., N_{Zp}, l=1, ..., N_{Zpk}) of the overlap region for Z error identification according to a predetermined algorithm using the updated b_{Zij} as an input value (step S3301). c_{Zkl} is Z error location data. c_{Zkl} represents whether the Ith data qubit in the kth overlap region is a Z error location. The predetermined algorithm is, for example, the same in each parallel processing device 22i.

The parallel processing device 22i updates c_{Xkl}={0,1} (k=1, ..., N_{Xp}, l=1, ..., N_{Xpk}) of the overlap region for X error identification according to a predetermined algorithm using the updated b_{Xij} as an input value (step S3302). c_{Xkl} is X error location data. c_{Xkl} indicates whether the I-th data qubit in the k-th overlap region is an X error location. The predetermined algorithm is, for example, the same in each parallel processing device 22i. The information processing system ends the decoding process.

Here, the information processing system may change the order of the processes of some steps in the flowcharts of Figs. 27 to 33. In addition, the information processing system may omit processes of some steps in each flowchart of Figs. 27 to 33.

As described above, according to the information processing device 100, it is possible to identify a rectangular region that is divided by a region on the line segment in at least one of the vertical direction and the horizontal direction in the entire region of the logical qubit. According to the information processing device 100, it is possible to identify multiple divided regions each including one rectangular area and sharing an area that is adjacent to the rectangular area and on a line segment in any direction. According to the information processing device 100, it is possible to determine a data qubit that is to be judged as having an error in each divided region of the identified multiple divided regions, based on the syndrome of each auxiliary qubit of the multiple auxiliary qubits. According to the information processing device 100, in each divided region, it is possible to determine whether the first data qubit overlapping or adjacent to the region shared with another divided region is determined as the data qubit judged as having an error. According to the information processing device 100, it is possible to update the syndrome of the auxiliary qubit that among the multiple auxiliary qubits, is adjacent to the first data qubit determined as the data qubit judged as having an error. According to the information processing device 100, it is possible to determine the data qubit judged as having an error in the region shared by the divided regions, based on the syndrome of each auxiliary qubit after the update. Accordingly, the information processing device 100 can accurately determine in the entire region, the data qubit judged as having an error. The information processing device 100 can reduce the processing load and the processing time necessary to determine the data qubit judged as having an error.

According to the information processing device 100, it is possible to identify a combined region obtained by combining regions shared by divided regions. According to the information processing device 100, it is possible to identify a path toward a specific side of the combined region, with each syndrome that represents an error as a starting point in the combined region, based on the updated syndrome of each auxiliary qubit. According to the information processing device 100, by inverting on the identified path, the data qubits not judged as having an error and the data qubits judged as having an error, it is possible to determine the data qubit judged as having an error in the region shared by the divided regions. As a result, the information processing device 100 can reduce the processing load and the processing time necessary to determine the data qubit judged as having an error in the region shared by the divided regions.

According to the information processing device 100, it is possible to select one side on which the number of data qubits to be judged as having an error is the smallest among two or more sides of the combined region. According to the information processing device 100, based on the respective syndromes of the auxiliary qubits after the update, it is possible to specify a path toward any selected side, the path starting from the syndromes that represent errors in the combined region. According to the information processing device 100, by inverting the data qubit not judged as having an error and the data qubit judged as having an error on the identified path, it is possible to determine the data qubit judged as an error in the region shared by the divided regions. Accordingly, the information processing device 100 can easily determine with high accuracy, the data qubit judged as having an error in the region shared by the divided regions.

According to the information processing device 100, in a case where the number of data qubits determined as an error on any line segment of the two-dimensional lattice shape is at least equal to the threshold value, it is possible to invert on the line segment, the data qubits not judged as having an error and the data qubits judged as having an error. Accordingly, the information processing device 100 can accurately identify the data qubit judged as having an error.

According to the information processing device 100, it is possible to allocate multiple identified divided regions to multiple computing units. According to the information processing device 100, it is possible to control the multiple computing units such that the multiple computing units execute, in parallel, the process of determining the data qubit judged as having an error in each divided region. Accordingly, the information processing device 100 can reduce the processing time necessary for the process of determining the data qubit judged as having an error in each divided region.

According to the information processing device 100, the auxiliary qubit corresponding to the Z error can be handled. According to the information processing device 100, it is possible to handle logical qubits formed such that auxiliary qubits and data qubits are alternately arranged on a line segment in the horizontal direction starting from a data qubit. Accordingly, the information processing device 100 can be applied to a case of determining a data qubit judged as having a Z error.

According to the information processing device 100, the auxiliary qubit corresponding to the X error can be handled. According to the information processing device 100, it is possible to handle logical qubits formed such that auxiliary qubits and data qubits are alternately arranged on a line segment in the vertical direction starting from a data qubit. Accordingly, the information processing device 100 can be applied to a case of determining a data qubit judged as having an X error.

According to the information processing device 100, it is possible to obtain the result of inverting the syndrome of the auxiliary qubit adjacent to the first data qubit among the multiple auxiliary qubits, for each divided region. According to the information processing device 100, it is possible to update the syndrome of each auxiliary qubit by combining the obtained results by an OR operation. Thus, the information processing device 100 can easily update the respective syndromes of the auxiliary qubits to be free of inconsistencies.

According to the information processing device 100, it is possible to divide the entire region by one or more regions that do not overlap each other and that are in the vertical direction or the horizontal direction, each of the one or more regions being in a corresponding range defined by one or more different line segments grouped together encompassing the corresponding range. Accordingly, the information processing device 100 can also be applied in a case where the divided regions share a region in a range defined by one or more line segments grouped together, encompassing the range.

According to the information processing device 100, in the overall region, it is possible to identify multiple divided regions including an inclusive region that is larger than a rectangular region by a predetermined width so as to include one rectangular region that is divided by a region on a line segment in at least one of the vertical direction and the horizontal direction. Accordingly, the information processing device 100 can easily determine the data qubit judged as having an error with high accuracy in the region shared by the divided regions.

The information processing method described in the present embodiment may be implemented by executing a prepared program on a computer such as a personal computer and a workstation. The program is stored on a non-transitory, computer-readable recording medium such as a hard disk, a flexible disk, a compact disc read-only memory (CD-ROM), a magneto-optical (MO) disc, and a digital versatile disc (DVD), read out from the computer-readable medium, and executed by the computer. The program may be distributed through a network such as the Internet.

### EXPLANATIONS OF LETTERS OR NUMERALS

100 information processing device
110, 600 logical qubits
111, 611 data qubit
112, 621, 631 auxiliary Quantum Bit
120 region
130 rectangular area
140, 700, 2311, 2321, 2331 divided region
200 quantum computing control system
201 network
210 quantum computing device
220, 221 parallel processing device
300, 400 bus
301, 401 CPU
302 memory
303, 403 network I/F
304, 404 recording medium I/F
305, 405 recording medium
406 computing device I/F
407 computing device
500 storage unit
501 obtaining unit
502 identifying unit
503 managing unit
504 correcting unit
505 output unit
510 computing unit
601 qubit
610 data qubit set
612, 622, 632 two-dimensional lattice
620, 630 auxiliary qubit set
710-712 overlap region
720, 2310, 2320, 2330 master region
731 to 734, 801, 802, 901, 902, 1001 to 1005
1010, 1020 path
1200 overlapping partial region
1300, 1400 arrangement
1500, 1600, 1700, 1800, 2300 entire region
2100, 2101 code
2400, 2500, 2600 graph.

## Claims

1. An information processing program for causing a computer to execute a process, the process comprising:
identifying a plurality of divided regions, each including one rectangular region divided by a region on a line segment in at least one of a vertical direction and a horizontal direction, the each sharing a region that is adjacent to the rectangular region and on the line segment in the one of the vertical direction and the horizontal direction, the plurality of divided regions being identified in an entire region of a logical qubit in which a plurality of data qubits and a plurality of auxiliary qubits are arranged in a two-dimensional lattice shape such that the plurality of auxiliary qubits is present at intersections of the two-dimensional lattice shape and the plurality of auxiliary qubits and the plurality of data qubits are arranged alternating each other on each line segment of the two-dimensional lattice shape;
determining in each of the plurality of divided regions and based on a syndrome of each of the plurality of auxiliary qubits, a data qubit that of the plurality of data qubits is to be judged as having an error;
updating in each of the plurality of divided regions, a syndrome of an auxiliary qubit that of the plurality of auxiliary qubits is adjacent to a first data qubit that overlaps or is adjacent to the region shared by the plurality of divided regions, when at the determining, the first data qubit is determined to be the data qubit judged to have an error; and
determining in the region shared by the plurality of divided regions and based on the syndrome updated in each of the plurality of divided regions at the updating, a data qubit that of the plurality of data qubits is to be judged as having an error.

2. The information processing program according to claim 1, wherein the determining the data qubit in the region shared by the plurality of divided regions includes inverting on a path toward a specific side of a combined region from each syndrome indicating that an error has occurred, a data qubit that of the plurality of data qubits is to be judged as having no error and the data qubit that is to be judged as having an error, thereby determining the data qubit to be judged as having an error in the region shared by the plurality of divided regions, the combined region being obtained by combining regions shared by the plurality of divided regions, based on the syndrome updated in each of the plurality of divided regions at the updating.

3. The information processing program according to claim 2, wherein the determining the data qubit in the region shared by the plurality of divided regions includes selecting, from among two or more sides of the combined region, a side having a smallest number of data qubits to be judged as having an error, and inverting on a path toward the selected side from each syndrome indicating that an error has occurred, the data qubit that is to be judged as having no error and the data qubit that is to be judged as having an error, thereby determining the data qubit to be judged as having an error in the region shared by the plurality of divided regions, based on the syndrome updated in each of the plurality of divided regions at the updating.

4. The information processing program according to any one of claims 1 to 3, the process further comprising inverting on a line segment of the two-dimensional lattice, a data qubit that of the plurality of data qubits is to be judged as not having an error and the data qubit to be judged as having an error, when a number of data qubits to be judged as having an error on the line segment is at least equal to a threshold.

5. The information processing program according to any one of claims 1 to 3, the process further comprising:
allocating the plurality of divided regions to a plurality of computing units; and
controlling the plurality of computing units to execute, in parallel, a process of determining in each of the plurality of divided regions, the data qubit to be judged as having an error.

6. The information processing program according to any one of claims 1 to 3, wherein
the plurality of auxiliary qubits corresponds to a Z error, and
the logical qubit is formed such that the plurality of auxiliary qubits and the plurality of data qubits are arranged alternating each other on a line segment in a horizontal direction, starting from the plurality of data qubits.

7. The information processing program according to any one of claims 1 to 3, wherein
the plurality of auxiliary qubits corresponds to an X error, and
the logical qubit is formed such that the plurality of auxiliary qubits and the plurality of data qubits are arranged alternating each other on a line segment in a vertical direction, starting from the plurality of data qubits.

8. The information processing program according to any one of claims 1 to 3, the process further comprising obtaining for each of the plurality of divided regions, a result of inverting the syndrome of the auxiliary qubit adjacent to the first data qubit among the plurality of auxiliary qubits, wherein
the updating includes updating the syndrome by combining, by an OR operation, the obtained result obtained for each of the plurality of divided regions.

9. The information processing program according to any one of claims 1 to 3, wherein the identifying includes identifying in the entire region, the plurality of divided regions, each including one rectangular region that is divided by one or more regions that do not overlap each other, the one or more regions being in the vertical direction or the horizontal direction and each being in a corresponding range defined by one or more different line segments grouped together, encompassing the corresponding range, the plurality of divided regions sharing among the one or more regions, a region adjacent to the rectangular region thereof.

10. The information processing program according to any one of claims 1 to 3, wherein the identifying includes identifying in the entire region, the plurality of divided regions that share a region that is adjacent to the rectangular region thereof and on a line segment in at least one of the vertical direction and the horizontal direction, by including therein an inclusive region that is larger than the rectangular region by a predetermined width so as to include one rectangular region divided by a region on the line segment in the at least one of the vertical direction and the horizontal direction.

11. An information processing method executed by a computer, the method comprising:
identifying a plurality of divided regions, each including one rectangular region divided by a region on a line segment in at least one of a vertical direction and a horizontal direction, the each sharing a region that is adjacent to the rectangular region and on the line segment in the one of the vertical direction and the horizontal direction, the plurality of divided regions being identified in an entire region of a logical qubit in which a plurality of data qubits and a plurality of auxiliary qubits are arranged in a two-dimensional lattice shape such that the plurality of auxiliary qubits is present at intersections of the two-dimensional lattice shape and the plurality of auxiliary qubits and the plurality of data qubits are arranged alternating each other on each line segment of the two-dimensional lattice shape;
determining in each of the plurality of divided regions and based on a syndrome of each of the plurality of auxiliary qubits, a data qubit that of the plurality of data qubits is to be judged as having an error;
updating in each of the plurality of divided regions, a syndrome of an auxiliary qubit that of the plurality of auxiliary qubits is adjacent to a first data qubit that overlaps or is adjacent to the region shared by the plurality of divided regions, when at the determining, the first data qubit is determined to be the data qubit judged to have an error; and
determining in the region shared by the plurality of divided regions and based on the syndrome updated in each of the plurality of divided regions at the updating, a data qubit that of the plurality of data qubits is to be judged as having an error.

12. An information processing device, comprising a controller configured to:
identify a plurality of divided regions, each including one rectangular region divided by a region on a line segment in at least one of a vertical direction and a horizontal direction, the each sharing a region that is adjacent to the rectangular region and on the line segment in the one of the vertical direction and the horizontal direction, the plurality of divided regions being identified in an entire region of a logical qubit in which a plurality of data qubits and a plurality of auxiliary qubits are arranged in a two-dimensional lattice shape such that the plurality of auxiliary qubits is present at intersections of the two-dimensional lattice shape and the plurality of auxiliary qubits and the plurality of data qubits are arranged alternating each other on each line segment of the two-dimensional lattice shape;
determine in each of the plurality of divided regions and based on a syndrome of each of the plurality of auxiliary qubits, a data qubit that of the plurality of data qubits is to be judged as having an error;
update in each of the plurality of divided regions, a syndrome of an auxiliary qubit that of the plurality of auxiliary qubits is adjacent to a first data qubit that overlaps or is adjacent to the region shared by the plurality of divided regions, when at the determining, the first data qubit is determined to be the data qubit judged to have an error; and
determine in the region shared by the plurality of divided regions and based on the syndrome updated in each of the plurality of divided regions at the updating, a data qubit that of the plurality of data qubits is to be judged as having an error.

13. A system comprising an information processing device and a plurality of computing units, wherein
the information processing device is configured to:
identify a plurality of divided regions, each of which includes one rectangular region divided by a region on a line segment in at least one of a vertical direction and a horizontal direction and shares a region adjacent to the rectangular region on the line segment in the one of the vertical direction and the horizontal direction, in an entire region of a logical qubit in which a plurality of data qubits and a plurality of auxiliary qubits are arranged in a two-dimensional lattice shape such that the auxiliary qubits exist at intersections of the two-dimensional lattice shape and the auxiliary qubits and the data qubits are alternately arranged on each line segment of the two-dimensional lattice shape; and
allocate the identified plurality of divided regions to the plurality of computing units;
each of the plurality of computing units is configured to:
determine, from among the plurality of auxiliary qubits, a data qubit to be judged as having an error in the divided region allocated thereto, based on a syndrome of an auxiliary qubit in the divided region allocated thereto;
invert the syndrome of an auxiliary qubit that of the plurality of qubits is adjacent to a first data qubit in the divided region allocated to thereto, when the first data qubit, which overlaps or is adjacent to a region shared with another divided region and in the divided region allocated thereto, is determined as the data qubit to be judged as having an error;
collect the syndrome of each auxiliary qubit that among the plurality of auxiliary qubits is inverted by another computing unit of the plurality of computing units, and update the syndrome of the each auxiliary qubit of the plurality of auxiliary qubits based on the syndrome of the auxiliary qubit inverted by the other computing unit and the syndrome of the auxiliary qubit inverted by the computing unit itself; and
determine the data qubit that is to be judged as having an error in a region shared by the divided regions, based on the syndrome of each of the auxiliary qubits after updating.
